# EUROPÄISCHE PATENTSCHRIFT

(11) **EP 2 865 503 B1**
(45) Veröffentlichungstag und Bekanntmachung des Hinweises auf die Patenterteilung: **30.06.2021**
(21) Anmeldenummer: 14184136.1
(22) Anmeldetag: 09.09.2014
(51) Int. Cl.: B29C 44/34, B01F 5/06, B01F 15/06, B29B 7/32, B29B 7/74, B29B 7/82, B29C 48/385, B29C 48/67, B29C 48/797, B29C 48/80, B29C 48/36, B29C 48/515, B29C 44/50

(54) **Verfahren zur Herstellung von niederdichten Schäumen**
Method for producing low density foams
Procédé pour la production des mousses à densité basse

(30) Priorität: 20.09.2013 EP 13185466; 20.11.2013 EP 13193728
(43) Veröffentlichungstag der Anmeldung: 29.04.2015
(73) Patentinhaber: Promix Solutions AG, 8406 Winterthur (CH)
(72) Erfinder: Heusser, Rolf, 8400 Winterthur (CH)
(74) Vertreter: Herrmann, Johanna

(56) Entgegenhaltungen:
- EP-A1- 0 291 179
- EP-A1- 0 980 703
- EP-A1- 1 384 502
- EP-A2- 1 123 730
- JP-A- H06 270 232
- US-A- 4 865 460
- US-A- 5 475 035
- None

## Beschreibung

Die Erfindung betrifft ein Verfahren zur Herstellung von niederdichten Kunststoffschäumen. Als niederdichte Kunststoffschäume werden Kunststoffschäume mit einer Dichte von weniger als 500 kg/m³ angesehen. Dabei wird der Kunststoff in einem ersten Extruder aufgeschmolzen, zudem wird der Kunststoffschmelze ein Treibmittel zugegeben, danach wird das Treibmittel in der Schmelze durch Misch- und Dispergiervorgänge im ersten Extruder und/oder einer statischen Mischstrecke zwischen erstem und zweitem Extruder und/oder im zweiten Extruder gelöst, danach wird die mit Treibmittel beladene Schmelze in einem zweiten Extruder gekühlt, danach wird die Schmelze durch einen statischen Mischereinsatz geführt, mit dem die Temperatur der Schmelze über den ganzen Querschnitt homogenisiert wird und gleichzeitig gekühlt oder geheizt werden kann, um auf diese Weise eine exakte Schmelzetemperatur zu erreichen. Danach wird die temperaturstabilisierte gekühlte Schmelze über eine Düse ausgetragen und schäumt zu einem Extrudat auf, worauf das aufgeschäumte oder noch aufschäumende Extrudat bis zur Erstarrung weiter gekühlt wird. An die Düse kann auch ein Granulator und im speziellen ein Unterwassergranulator anschliessen. In diesem Falle erstarrt die mit Treibmittel beladene Schmelze ohne Aufschäumen. Das Aufschäumen erfolgt dann in einem Nachfolgeprozess.

Es sind Verfahren zur Herstellung von niederdichten Schäumen bekannt, bei denen das Kunststoffgranulat in einer ersten Stufe eines ersten Extruders aufgeschmolzen wird. Der entstehenden Schmelze wird in einer zweiten Stufe des ersten Extruders ein gasförmiges oder flüssiges Treibmittel zugegeben und eingelöst. Im Anschluss wird die mit Treibmittel beladene Schmelze über eine Transferleitung in einen zweiten Extruder geleitet, wobei die Schmelze in diesem zweiten Extruder gekühlt wird. Die den zweiten Extruder verlassende Schmelze wird durch einen statischen Mischer geführt. Ein derartiger statischer Mischer kann als rohrförmiger Hohlkörper ausgebildet sein, in dessen Innenraum ortsfeste Einbauten angeordnet sind, welche als Mischereinsätze ausgebildet sind. Der rohrförmige Hohlkörper hat in der Regel einen kreisförmigen Querschnitt. Durch die Einbauten wird die Strömung gestört, wodurch es zu einer Durchmischung kommt. In der Regel tritt die Schmelze in den statischen Mischer mit einem Temperaturgradienten ein. Die Kerntemperatur der Schmelze entspricht nicht der Wandtemperatur an der Innenwand des rohrförmigen Hohlkörpers. Durch die Mischvorgänge im Innenraum des statischen Mischers wird die Temperatur der Schmelze über den ganzen Querschnitt vergleichmässigt. Danach wird die Schmelze über eine Düse ausgetragen und schäumt auf. Daraufhin wird das aufgeschäumte oder noch aufschäumende Extrudat bis zur Erstarrung weiter gekühlt.

Gemäss EP2138294 A1 sind auch Verfahren bekannt, welche einen ersten Extruder, einen zweiten Extruder und eine den ersten und zweiten Extruder verbindende Transferleitung enthalten. Die Transferleitung bildet das Verbindungsstück zwischen dem ersten und zweiten Extruder aus. Ein Treibmittel wird der Schmelze nach Austritt aus einem ersten Extruder in der Transferleitung zugegeben und durch statische Mischer in die Schmelze eingemischt.

Es ist auch bekannt, dass statische und dynamische Kühler in die Transferleitung zwischen den ersten und den zweiten Extruder eingebaut werden, um so die Kühlleistung des zweiten Extruders zu erhöhen. Des Weiteren ist es bekannt, statische Mischer in die Transferleitung einzubauen. Aus der JP06-270232 ist auch ein beheiztes Verteilelement für eine schäumbare Kunststoffschmelze bekannt, welches stromabwärts eines zweiten Extruders angeordnet ist. Dieses Verteilelement ist ein Zylinder, der einen Zylindermantel mit einer Mehrzahl von Bohrungen enthält. Der Zylinder weist eine Wand auf, welche den Durchfluss blockiert und die Strömung in Richtung des Zylindermantels umlenkt. Der Zylinder ist in Hauptströmungsrichtung angeordnet. Die Kunststoffschmelze tritt in den Zylinder ein, trifft auf die im Zylinder angeordnete Wand und wird in Richtung der Zylinderwand umgelenkt. Die schäumbare Kunststoffschmelze wird um 90 Grad von der Hauptströmungsrichtung umgelenkt und durch die Bohrungen von innen an die Aussenseite des Zylindermantels geführt. Der Zylinder ist von einem Gehäuse umgeben, sodass die Schmelze in dem Gehäuse strömt um dann wieder von aussen auf der gegenüberliegenden Seite der Wand durch die dortigen Bohrungen in der Zylinderwand wieder in den Zylinder einzutreten. Die Kunststoffschmelze wird somit umgelenkt, durch die Bohrungen in der ersten Zylinderwandhälfte gepresst, durch die Gehäusewand nochmals umgelenkt und durch die Bohrungen der zweiten Zylinderwandhälfte wieder in den Zylinder eingebracht. Das heisst, die Kunststoffschmelze wird durch einen siebartigen Einsatz, der durch jede der mit Bohrungen versehenen Zylinderwandhälften gebildet wird, durchgedrückt, wodurch ein Mischeffekt entstehen kann. Durch diesen Mischeffekt können allerdings die Temperaturunterschiede in der Schmelze in keiner Weise ausgeglichen werden, da keine Vermischung über den gesamten Strömungsquerschnitt stattfinden kann. Es ist dabei zu berücksichtigen, dass Kunststoffschmelzen laminar fliessen und ein Mischeffekt nur durch Schichtenbildung (bedingt durch Umlenkung eines Teils der Schmelze) aber nicht durch Verwirbelung erreicht werden kann. Die im Gehäuse des Verteilelements der JP06-270232 angeordneten Heizelemente dienen der Temperierung des Gehäuses, um Ablagerungen zu vermeiden und zum Aufschmelzen des Kunststoffes im Apparat beim Anfahren der Anlage. Der siebartige Einsatz ist sowohl bezüglich Temperaturhomogenisierung wie auch bezüglich Kühlung/Heizung der Schmelze ungeeignet.

Aus der EP0291179 A1 ist bekannt, den Druckverlust eines Mischers für eine mit Treibmittel versetzte Kunststoffschmelze zu überwachen. Der Mischer befindet sich vor der Austrittsdüse und wird dazu verwendet, die Kunststoffschmelze mit dem Treibmittel zu vermischen. Die Überwachung dient allerdings dazu, einen geschäumten Artikel mit einer guten Oberflächenqualität herzustellen, d.h. eine Oberfläche ohne Löcher, Risse oder Strukturen herzustellen, damit es an der Düse nicht zu einer Gasentwicklung kommen kann. Über die Qualität des Schaums im Inneren des geschäumten Artikels wird keine Aussage gemacht. Dementsprechend kann ein beliebiger Mischertyp zum Einsatz kommen, auch ein Extruder kann als Mischer verwendet werden. Das heisst die Qualität des Schaums gemäss der Erkenntnisse in EP0291179 A1 wird nicht oder nur unwesentlich von der Konfiguration des statischen Mischers bestimmt. Daher wird der Auswahl des statischen Mischers und der Temperierung desselben in der EP0291179 A1 keine Beachtung geschenkt.

Aus der US5475035 ist es bekannt eine schäumbare Polymerschmelze unter der Zugabe von zwei verschiedenen Treibmitteln herzustellen. Dabei liegt die Zielsetzung darin der Polymerschmelze ein Treibmittel, welches korrosive Komponenten enthält, zu einem möglichst späten Zeitpunkt zuzuführen, um eine Kontamination des Extruders oder des Mischers zu vermeiden. Um die Einmischung eines korrosive Komponenten enthaltenden Treibmittels in die Polymerschmelze möglichst schnell vorzunehmen, ist daher ein dynamischer Mischer zum Eintrag des zweiten Treibmittels vorgesehen. Ein Temperaturausgleich zur Verbesserung der Oberflächenqualität des geschäumten Extrudats ist demnach nach dem in US5475035 beschriebenen Verfahren nicht vorgesehen. Die Verwendung eines dynamischen Mischers entspricht auch der der vorherrschenden Fachmeinung, dass der Einsatz von dynamischen Kühlern von schon im Kühlextruder vorgekühlten Polymerschmelzen besser geeignet ist. Die Schmelze befindet sich in derartigen Verfahren nahe dem Erstarrungspunkt. Daher ging man bei Anwendung der Verfahren gemäss EP0291179 A1 oder US5475035 davon aus, dass es beim Einsatz von statischen Mischern zu Ablagerungen und zum Einfrieren der Schmelze kommt. Insbesondere würde dieser Effekt durch eine Kühlung eines statischen Mischers begünstigt.

Es hat sich gezeigt, dass mit den bekannten Verfahren nicht immer eine zufriedenstellende, konstante Schaumqualität erreicht werden kann. Unter guter Schaumqualität werden Schaumprodukte verstanden, die sich zum Beispiel durch hohe mechanische Reiss- oder Druckfestigkeiten, geringe Dichten oder hohe Isolationswerte ausweisen. Diese Werte werden durch die Zellstruktur des Schaumproduktes beeinflusst. Vielfach sind eine enge Zellgrössenverteilung, möglichst kleine Zellgrössen und möglichst viele Zellen pro Volumen mit möglichst dünnen Zellwänden für gute Schaumqualitäten wichtig. Es sollten zudem sowohl über die Zeit wie auch im ganzen Produktquerschnitt möglichst gleichbleibende Zellstrukturen erreicht werden.

Es ist zwar eine Vielzahl von statischen Mischern bekannt, allerdings weisen diese vorbekannten Mischer eine Reihe von Nachteilen auf, sodass bei deren Einsatz nicht die gewünschte Schaumqualität erhältlich ist. Beispielsweise wird in der EP 0 980 703 A1 ein statischer Mischer vorgeschlagen, der mit Kanälen für ein Wärmeträgerfluid ausgestattet ist. Dieser statische Mischer verfügt über in Strömungsrichtung angeordnete, zackenförmige Plattenelemente, die kreuzweise aufeinander aufliegen. Die Plattenelemente werden als Stege bezeichnet. Diese Stege erstrecken sich über die gesamte Breite des Mischelements. Die Stege sind als dickwandige Plattenelemente ausgeführt, da sie einen Kanal enthalten, der quer zur Hauptströmungsrichtung durch jeden der Stege hindurch führt. Die gezackten Stege bewirken eine geringe und nur lokale Quervermischung, die nicht den ganzen Querschnitt des Mischraumes erfasst. Der auf den Steg auftreffende Fluidstrom wird durch jeden Steg in je zwei seitlich des Stegs vorbeiströmende Hauptteilströme geteilt und in je einen Nebenteilstrom des Fluidstroms, der entlang der Zacken des Stegs von der in die Strömung ragenden Zackenspitze in das nächstliegende Zackental abgeleitet wird. Diese Ableitung des Nebenteilstroms erfolgt von jeder der Zackenspitzen, sodass eine teilweise Ablenkung dieses Nebenteilstroms erfolgen kann. Allerdings bleibt diese Ablenkung auf den kleinen Nebenteilstrom und nur auf einen Teil des Querschnitts des Mischers beschränkt, da jeder Steg eine Vielzahl von Zacken enthält. Daher ist der Anteil der Quervermischung in dem in EP 0 980 703 A1 gezeigten Mischer gering.

Eine Variante eines derartigen statischen Mischers wird in der EP 1 384 502 A1 gezeigt. Wie in der EP 0 980 703 A1 verlaufen die Kanäle für ein Wärmeträgerfluid im Wesentlichen quer zur Hauptströmungsrichtung. Die Kanäle der EP 1 384 502 A1 verlaufen im Inneren von berippten Rohren. Die Rippen können beispielsweise sternförmig in die Fluidströmung ragen. Es erfolgt auch an diesen Rippen eine geringe Umlenkung oder Querverschiebung des Fluidstroms, die aber ebenfalls lokal auf die Umgebung der Rippen beschränkt ist. Da die Rippen nicht mit einem Wärmeträgerfluid durchströmt werden, sind sie zudem als Wärmeaustauschfläche nur beschränkt wirksam. Andererseits benötigen sie relativ viel Platz. Daher kann eine dichtere Packung von Rohren, die mit Wärmeträgerfluid durchströmt werden können, nicht realisiert werden und dementsprechend ist die erzielbare Wärmeaustauschfläche reduziert.

Das Dokument US 4 865 460 A zeigt einen statischen Mischer mit rohrförmigen Mischereinsätzen. Allerdings haben die in diesem Dokument gezeigten Rohre mit kreisförmigem Querschnitt den inhärenten Nachteil, dass die Mischleistung durch den geringen Abströmwiderstand der in dieser Strömung angeordneten Rohre nicht optimal ist. Daher hat sich die in der US 4 865 460 A gezeigte Lösung bewährt, um eine Wärmeübertragung von den Rohren auf das in der Leitung fliessende Material zu erzielen, liefert aber bedingt durch die geometrische Einschränkung der Zylindergeometrie nur eine begrenzte Mischleistung, die nicht den gesamten Querschnitt des Mischraums, im Dokument als Leitung bezeichnet, erfasst. Auch die EP 1 123 730 A2 zeigt einen statischen Mischer, welcher Rohre als Mischelemente enthält. Die Rohre sind in Gittern angeordnet, die um die Mittenachse des Mischelements gedreht sind. Es werden drei oder vier Gitter verwendet, die in einem Winkel von 120 Grad bzw. 90 Grad zueinander angeordnet sind. Dieser Mischer wird für hochviskose Polymerschmelzen nicht eingesetzt weil diese lose in einem Gehäuse angeordnete Gitterstruktur aus Festigkeitsgründen nicht zur Verarbeitung von hochviskosen Polymerschmelzen geeignet ist. Im erfindungsgemässen Verfahren müssen die eingesetzten statischen Mischer typischerweise Nenndrücke von 200 bar und Temperaturen von 250 Grad Celsius standhalten.

Aufgabe der Erfindung ist es, das Verfahren zur Herstellung eines niederdichten Schaums zu optimieren, um konstante gute Schaumqualitäten zu erhalten, das heisst insbesondere einen Schaum mit homogenen physikalischen Eigenschaften, welche in verbesserten mechanischen Eigenschaften, wie Festigkeit, Zähigkeit oder Formbeständigkeit und / oder erhöhten Wärmeisolationswerten und oder geringerer Schaumdichte resultieren.

Hierzu wird ein Verfahren zur Herstellung von niederdichten Schäumen gemäß dem Anspruch 1 vorgeschlagen.

Unter temperaturstabilisierter Schmelze wird hierbei eine Schmelze verstanden, die eine gleichmässige Temperatur über den Schmelzequerschnitt gemessen aufweist. Das Treibmittel kann der Kunststoffschmelze im ersten Extruder und/oder im zweiten Extruder und/oder in der Transferleitung zwischen dem ersten und zweiten Extruder zugegeben werden.

Das Treibmittel kann in der Schmelze durch Misch- und Dispergiervorgänge im ersten Extruder und/oder einem statischen Mischer und/oder einer Transferleitung zwischen erstem und dem zweitem Extruder und/oder im zweiten Extruder gelöst werden.

Es hat sich gezeigt, dass zum Erreichen einer guten Schaumqualität neben der Temperaturhomogenisierung der Schmelze vor der Düse auch eine exakte Temperaturführung entscheidend ist, zudem muss die Schmelzetemperatur, das heisst die Temperatur der Schmelze zum Erreichen von sehr niederen Schaumdichten vielfach sehr tief gehalten werden. Mit den gemäss Stand der Technik eingesetzten statischen Mischern nach dem zweiten Extruder können zwar die Temperaturinhomogenitäten, die typischerweise nach dem zweiten Extruder vorhanden sind, ausgeglichen werden. Die statischen Mischer eignen sich aber nicht zur Beeinflussung der Temperatur, da mit ihnen nicht effizient gekühlt oder geheizt werden kann. Zudem bewirkt der Einsatz von statischen Mischern in vielen Fällen einen Temperaturanstieg der Schmelze bedingt durch den Druckverlust im Mischer. Der hierdurch verursachte Staudruck wird auf den zweiten Extruder ausgeübt und durch entsprechend höhere Friktion im Extruder kompensiert. Friktion führt zur Erzeugung von Wärme, was einen Temperaturanstieg der Schmelze zur Folge hat. Ein Temperaturanstieg der Schmelze ist aber in vielen Fällen unerwünscht, da dadurch niedrige Schaumdichten nicht erreicht werden können. Unter einem Schaum mit einer niedrigen Schaumdichte wird ein Schaum mit einer Dichte von weniger als 50%, vorzugsweise weniger als 20%, besonders bevorzugt weniger als 10% bezogen auf die Dichte einer ungeschäumten Polymerschmelze verstanden.

Eine exakte Temperaturführung im Austritt des zweiten Extruders ist vielfach sehr schwierig, da die Schmelze im zweiten Extruder mit hohen treibenden Temperaturdifferenzen um typischerweise 20 bis über 80 Grad Celsius gekühlt werden muss. Entsprechend ist eine Regelung der Austrittstemperatur im Bereich von plus / minus 1 bis 4 Grad Celsius sehr schwierig. Dazu ist auch noch zu berücksichtigen, dass die Schmelzetemperatur im Austritt vom zweiten Extruder über den Querschnitt gesehen vielfach sehr inhomogen ist. Die Temperaturunterschiede zwischen einer wandnahen Zone der Polymerschmelze und einem zentralen Bereich können bis zu 30 Grad Celsius betragen. Unter einem zentralen Bereich wird ein Bereich verstanden, der einem rotationssymmetrischen Körper entspricht, der um die Mittenachse des Extruders angeordnet ist und sich bis zu einem Drittel des Abstands zwischen Mittenachse und Innenwand des Extruders oder des statischen Mischers erstreckt.

Zudem können Veränderungen im Prozess zum Beispiel die Bildung von Ablagerungen im zweiten Extruder oder die Veränderung der Qualität vom eingesetzten Kunststoffrohmaterial zu zeitlichen Veränderungen des Temperaturprofils führen. Sowohl die durch die statischen Mischer verursachten Temperaturveränderungen wie auch die zeitlichen prozessbedingten Temperaturveränderungen können mit dem Verfahren gemäss Stand der Technik nicht mehr kompensiert werden und führen vielfach zu schlechten und oder sich verändernden Schaumqualitäten.

Daher wurde in der EP0291179 A1 oder US5475035 der Ansatz verfolgt, dynamische Mischer einzusetzen. Die rotierenden Kühlsysteme sind durch das kontinuierliche mechanische Abschaben der Schmelze auf den Kühlflächen weniger anfällig auf Ablagerungen. Erstaunlicherweise hat es sich gezeigt, dass der Einsatz der erfindungsgemässen kühlbaren statischen Mischern zur Herstellung eines qualitativ hochwertigen Schaums besser geeignet ist als die dynamischen Mischer, auch wenn die dynamischen Mischer als dynamische Kühler ausgebildet sein sollten. Denn ein dynamischer Kühler generiert viel Friktionswärme, die neben der eigentlichen Kühlung kompensiert werden muss, was nur durch tiefere Kühlmitteltemperaturen möglich ist und entsprechend das Risiko für Ablagerungen von eingefrorener Schmelze an den rotierenden, also dynamischen Mischern erhöht. Zudem ist bei dynamischen Mischern mit Kühlung nicht gewährleistet, dass die Schmelzetemperatur über den ganzen Querschnitt homogen ist- was aber für eine gute Schaumstruktur von hoher Wichtigkeit ist.

Die erfindungsgemässe Optimierung des Prozesses besteht darin, dass die Schmelze nach dem zweiten Extruder durch einen statischen Mischereinsatz geführt wird, mit dem gleichzeitig gekühlt oder geheizt werden kann. Der Begriff Schmelzestrom kann synonym für Schmelze verwendet werden. Durch den Mischereinsatz nach dem zweiten Extruder wird die Temperatur über den ganzen Querschnitt ausgeglichen. Der Mischereinsatz weist Einbauelemente auf, die in die Schmelze, insbesondere Kunststoffschmelze eingreifen. Erfindungsgemäß wird die Schmelze über die Einbauelemente gekühlt oder beheizt werden. Der statische Mischereinsatz ist erfindungsgemäß mit Einbauelementen ausgestattet, welche zumindest teilweise einen Kanal enthalten können, durch welchen ein Wärmeträgerfluid strömen kann. Das Wärmeträgerfluid ist durch die Kanalwände von der Schmelze getrennt, das heisst, das Wärmeträgerfluid kommt nicht mit der Schmelze in Kontakt. Es kann eine homogene Schmelzetemperatur erreicht werden, was bedeutet, dass die kälteste, niedrigste und heisseste, höchste Temperatur im Schmelzequerschnitt nach dem Mischereinsatz weniger als 5 Grad respektive weniger als 3 Grad respektive weniger als 1.5 Grad auseinander liegen. Der statische Mischereinsatz wird zudem gleichzeitig über ein Wärmeträgermedium gekühlt oder erwärmt werden, um so die Schmelze auf die optimale Verarbeitungstemperatur zu bringen. Diese Temperierung kann zum Beispiel von aussen über einen Doppelmantel erfolgen, der mit dem Wärmeträgermedium durchströmt wird. Als Wärmeträgermedium sind zum Beispiel Flüssigkeiten wie Wasser oder Öle geeignet. Es können aber auch andere Flüssigkeiten oder Gase wie Luft eingesetzt werden. Es hat sich aber gezeigt, dass speziell bei höheren Schmelzedurchsätzen von mindestens 50 kg/h eine Temperierung von aussen nur eine bedingte Wirksamkeit aufweist, da die Temperieroberfläche im Verhältnis zum Mischervolumen zu klein ist. Bei grösseren Schmelzedurchsätzen wird das Wärmeträgermedium daher bevorzugt über Einbauten geleitet, die in den Schmelzestrom eingreifen, um die Temperieroberfläche zu erhöhen. Der Mischereinsatz und die Einbauten für das Wärmeträgermedium werden bevorzugt so angeordnet, dass die Schmelze nicht in Teilströme aufgeteilt wird, sondern als Ganzes kontinuierlich über den ganzen Querschnitt gemischt wird. Der Mischereinsatz kann Einbauelemente in beliebiger Form enthalten. Die Einbauelemente können beispielsweise rohrförmige, stabförmige oder flächige, beispielsweise flügelartige Stegelemente umfassen.

Vorteilhafterweise kann bereits zwischen dem ersten und zweiten Extruder ein Temperaturausgleich und oder eine Vorkühlung der Schmelze erfolgen, wobei die Schmelze durch einen dynamischen Mischer, einen statischen Mischer, einen Wärmetauscher oder eine Transferleitung, die insbesondere als beheizbares oder kühlbares Rohrelement ausgebildet sein kann, oder durch eine Kombination von zumindest zwei der vorgenannten Vorrichtungen geführt wird.

Zumindest ein Teil der Stegelemente kann eine Gruppe ausbilden. Eine derartige Gruppe kann beispielsweise derart gebildet werden, dass die Stegelemente je eine Mittenachse aufweisen. Die Mittenachsen der zu der Gruppe gehörigen Stegelemente schliessen einen im Wesentlichen konstanten Winkel zur Mittenachse des Mischereinsatzes ein.

Es hat sich gezeigt, dass sich ein Mischereinsatz besonders gut eignet, der eine erste Gruppe von Stegelementen sowie eine zweite Gruppe von Stegelementen umfasst, wobei die erste Gruppe von Stegelementen sich entlang einer gemeinsamen ersten Gruppenebene erstreckt und die zweite Gruppe von Stegelementen sich entlang einer zweiten gemeinsamen Gruppenebene erstreckt. Solche Mischereinsätze können die Temperatur besonders gut über den ganzen Querschnitt ausgleichen. Als eingreifende Einbauelemente für die Schmelzetemperierung können beliebig geformte Einbauelemente verwendet werden, wie zum Beispiel Rohre oder Kanäle enthaltende Stegelemente die parallel zur Schmelzeflussrichtung angeordnet sind oder auch Einbauelemente, die in einem Winkel zur Schmelzeströmung angeordnet sind. Der Winkel zwischen der Mittenachse des Mischereinsatzes und der Mittenachse des Einbauelements kann insbesondere als spitzer Winkel oder als komplementärer stumpfer Winkel ausgebildet sein. Die Mittenachse des Mischereinsatzes entspricht der Hauptströmungsrichtung der Schmelzeströmung. Unter eingreifenden Einbauelementen sollen hiermit Einbauelemente verstanden werden, die in die Schmelze hineinragen. Ein derartiges Einbauelement ist daher ein die Strömung störender Körper, welcher der Schmelze lokal eine Richtungsänderung aufzwingt.

Eine oder mehrere Gruppen von Stegelementen können mit dem Gehäusemantel verbunden sein oder aber auch als ausbaubarer Mischereinsatz im Gehäuse angeordnet sein. Es hat sich gezeigt, dass es besonders vorteilhaft ist, die eingreifenden Einbauelemente für die Schmelzetemperierung mit den im Mischereinsatz angeordneten Einbauelementen zu kombinieren. So können zum Beispiel zumindest zwei sich kreuzende Gruppen von Stegelementen oder Rohrelementen eingesetzt werden, durch die ein Wärmeträgermedium fliesst. Die sich kreuzenden Stegelement- oder Rohrelementgruppen sind über eine Kopfplatte gehalten und können aus dem sie umhüllenden Mischerrohr ausbaubar sein. Mit solchen Mischereinsätzen können sehr hohe Wärmeaustauschflächen realisiert werden. Mindestens ein Teil der Stegelemente kann Kanäle aufweisen, wobei die Kanäle sich von einem ersten Ende des Stegelements zu einem zweiten Ende des Stegelements erstrecken, wobei das Mantelelement je einen korrespondierenden Kanal enthält, der mit dem ersten Ende und zweiten Ende des Stegelements in fluidleitender Verbindung steht.

Die Mischereinsätze können auch durch eine Mehrzahl von Rohrelementen gebildet werden, die sich von einem Eintrittsende des Mischers zu dessen Austrittsende erstrecken. Hierbei können sich der Anfang und das Ende des Rohrelements des Mischereinsatzes in derselben Kopfplatte befinden. Diese Kopfplatte ist mit dem Mischer, also dem Gehäuse, welches den Mischereinsatz umgibt, verbunden. Ein derartiges Rohrelement weist mindestens eine Umlenkung auf, die beispielsweise u-förmig ausgebildet sein kann. Zusätzlich zu dieser Umlenkung kann das Rohrelement weitere Umlenkungen aufweisen. Insbesondere kann ein derartiges Rohrelement derart ausgestaltet sein, dass die Umlenkungen im wandnahen Bereich angeordnet sind und sich zwischen benachbarten Umlenkungen gerade Rohrstücke erstrecken. Die geraden Rohrstücke können in einem spitzen Winkel zur Mittenachse des Mischers verlaufen, der Winkel kann insbesondere zwischen 10 Grad und 80 Grad liegen. Eine Mehrzahl derartiger Rohrelemente kann ein Rohrbündel ausbilden. Das Rohrbündel kann mehrere Gruppen von Rohrelementen enthalten, wobei die Rohrelemente derselben Gruppe im Wesentlichen parallel zueinander verlaufen. Die Gruppenebene wird durch die Mittenachsen der zu der entsprechenden Gruppe gehörigen Rohrelemente oder Stegelemente gebildet.

Es hat sich allerdings herausgestellt, dass der Mischeffekt eines primär als Wärmetauscher zum Einsatz kommenden derartigen Rohrbündels unter Umständen nicht zu optimalen Resultaten führt, da die sich ausdehnenden Rohre im Randbereich den Mischeffekt negativ beeinflussen. Ein derartiger Wärmetauscher ist beispielsweise in der DE2839564 gezeigt. Als Randbereich wird der wandnahe Bereich des Mischereinsatzes verstanden, also der Bereich des Mischereinsatzes der dem Gehäuse des umhüllenden Mischers nächstgelegen ist. Die Ausdehnung der Rohre ist eine Folge der in der Kunststoffschmelze herrschenden Temperaturen, die je nach deren Zusammensetzung bis zu 250 Grad Celsius betragen können.

Besonders gut eignen sich Einbauelemente, bei dem der statische Mischereinsatz eine erste Gruppe von Stegelementen sowie eine zweite Gruppe von Stegelementen umfasst, wobei die erste Gruppe von Stegelementen sich entlang einer gemeinsamen ersten Gruppenebene erstreckt und die zweite Gruppe von Stegelementen sich entlang einer zweiten gemeinsamen Gruppenebene erstreckt. Mindestens ein Teil der Stegelemente weist Kanäle auf, wobei die Kanäle sich von einem ersten Ende des Stegelements zu einem zweiten Ende des Stegelements erstrecken. Das Mantelelement enthält je einen korrespondierenden Kanal, der mit dem ersten Ende und zweiten Ende des Stegelements in fluidleitender Verbindung steht. Solche temperierbaren Mischereinsätze zeichnen sich durch eine sehr gute Mischwirkung und gleichzeitig auch eine sehr hohe Kühlleistung respektive Heizleistung aus. Da der Mischereinsatz gleichzeitig auch die Temperierung übernimmt, sind keine zusätzlichen Einbauten wie zum Beispiel parallel zur Schmelzeströmung angeordnete Rohre für das Temperieren erforderlich, die den Mischprozess stören.

Es hat sich gezeigt, dass durch den Einsatz vom erfindungsgemässen Mischereinsatz in Kombination mit dem beschriebenen Verfahren in vielen Fällen eine erstaunliche Verbesserung der Schaumstruktur erreicht werden kann. So können speziell Schäume mit sehr gleichmässigen Zellstrukturen, tiefer Schaumdichte und enger Zellgrössenverteilung erzielt werden. Dank der hervorragenden Zellstruktur sind auch die physikalischen Eigenschaften wie Reissfestigkeit, Zugfestigkeit oder der Isolationswert sehr gut. Auch kann eine eingestellte Schaumstruktur über die Zeit konstant gehalten werden, da unterschiedliche Temperaturbedingungen vom Extruder ausgeglichen werden können.

Es hat sich ferner gezeigt, dass es sehr vorteilhaft ist, die Schmelzetemperatur über den kühl- und heizbaren Mischereinsatz zu regeln. Dabei wird vorteilhafterweise die Schmelzetemperatur nach dem Mischereinsatz zum Beispiel im Auslassbereich des Mischereinsatzes oder in der Düse gemessen und über Kühlen oder Heizen des Mischereinsatzes auf einer einstellbaren Solltemperatur gehalten. So kann eine bestimmte Temperatur auch bei sich ändernden Prozessbedingungen eingehalten werden, was für eine gleichbleibende Schaumqualität sehr wichtig ist.

Eine über einen Querschnitt der Schmelze im Wesentlichen homogene Temperaturverteilung hat den Vorteil, dass die Zellgrössenverteilung über den ganzen Querschnitt des Extrudates vergleichmässigt wird. Bedingt durch die geringere Streuung der Zellgrösse in dem Querschnitt ergibt sich ein homogener Zellenaufbau, was zu einem Kunststoffkörper mit einem definierten Eigenschaftsprofil führt. Insbesondere weicht die mittlere Zellgrösse eines Breitenabschnittes von 20% der Gesamtbreite der extrudierten Folie oder Platte um weniger als 20% und vorzugsweise um weniger als 10% von den mittleren Zellgrössen eines jeden weiteren Breitenabschnittes ab. Bei der Herstellung von Platten und Folien zur thermischen Isolation beträgt der Anteil an offenen Zellen insbesondere weniger als 15%, vorzugsweise weniger als 10%, besonders bevorzugt weniger als 5% der gesamten Anzahl der Zellen.

Das erfindungsgemässe Verfahren kann für die Herstellung von niederdichten Schäumen aus allen Polymeren eingesetzt werden, es eignet sich aber speziell Polymere wie Polystyrol, Polypropylen, Polyethylen, Polyethylenterephthalat, Polyvinylchlorid, Polyacrylnitril, Polyamid, Polyester, Polyacrylat, Polymilchsäure (polylactic acid, PLA) und andere Biopolymere oder Mischungen davon. Als Treibmittel kommen beliebige Flüssigkeiten, Gase oder auch Feststoffe, die Gase abspalten oder Gemische von Treibmitteln zum Einsatz. Speziell eignen sich Ether, Kohlenwasserstoffe, Ketone, Ester, Wasser, Kohlendioxyd oder Stickstoff.

Insbesondere kann das Düsenelement nach dem Mischereinsatz als Düse oder als Granulator ausgebildet sein. Anstelle der Verwendung einer Düse, bei der das Extrudat aufschäumt, kann somit auch ein Granulator und im speziellen ein Unterwassergranulator eingesetzt werden, mit dem die treibmittelbeladene Schmelze granuliert wird und erst später in einem Folgeprozess aufgeschäumt wird.

Eine Vorrichtung zum statischen Mischen und Wärmeaustausch umfasst ein Mantelelement und einen Mischereinsatz, wobei der Mischereinsatz im Betriebszustand im Inneren des Mantelelements angeordnet ist. Der Mischereinsatz hat eine Längsachse, die sich im Wesentlichen in Richtung der Strömung des fliessfähigen Mediums erstreckt. Die Richtung der Strömung wird nachfolgend als Hauptströmungsrichtung bezeichnet.

Der Mischereinsatz umfasst eine erste Gruppe von Stegelementen sowie eine zweite Gruppe von Stegelementen, wobei die erste Gruppe von Stegelementen sich entlang einer gemeinsamen ersten Gruppenebene erstreckt und die zweite Gruppe von Stegelementen sich entlang einer zweiten gemeinsamen Gruppenebene erstreckt. Die Gruppenebene ist somit dadurch charakterisiert, dass sie die Mittenachse der Stegelemente enthält. Mindestens ein Teil der Stegelemente weist Kanäle auf, wobei die Kanäle sich von einem ersten Ende des Stegelements zu einem zweiten Ende des Stegelements erstrecken. Das Mantelelement enthält je einen korrespondierenden Kanal, der mit dem ersten und zweiten Ende des Stegelements in fluidleitender Verbindung steht, wobei der Übergang von zumindest einem der ersten und zweiten Enden des Stegelements zu dem jeweils korrespondierenden Kanal im Mantelelement spaltfrei erfolgt. Zumindest ein Teil der Stegelemente erstrecken sich somit über die gesamte Breitenabmessung oder den Durchmesser des Mantelelements. Die Kanäle in den Stegelementen erstrecken sich vom ersten Ende zum zweiten Ende des Stegelements, welches unmittelbar an die Innenwand des Mantelelements anschliesst. Im Mantelelement befindet sich ein Kanal, der an das Kanalende am jeweiligen Ende des Stegelements anschliesst. Die Stegelemente können somit vom Mantelelement mit einem Wärmeträgerfluid, insbesondere einer Wärmeträgerflüssigkeit, gespeist werden und von dem Wärmeträgerfluid durchströmt werden. Die Länge des Kanals ist grösser als der mittlere Durchmesser des Mantelelements, wenn das Stegelement die Längsachse enthält.

Der mittlere Durchmesser entspricht dem Innendurchmesser, wenn das Mantelelement als ein Kreisrohr ausgeführt ist. Der mittlere Durchmesser für ein eckiges Mantelelement wird als dessen Umfang / n definiert, es handelt sich somit um einen äquivalenten Durchmesser. Die Länge des Kanals liegt mindestens 10% über dem mittleren Durchmesser, wenn der Kanal die Mittenachse kreuzt. Die Länge dieses Kanals liegt insbesondere mindestens 20% über dem mittleren Durchmesser, besonders bevorzugt mindestens 30% über dem mittleren Durchmesser.

Ein Stegelement ist in seinen Abmessungen durch seine Länge, seine Breite und seine Dicke bestimmt. Die Länge des Stegelements wird vom ersten Ende des Stegelements zum zweiten Ende des Stegelements gemessen. Die Länge des Kanals entspricht im Wesentlichen der Länge des Stegelements.

Die Breite des Stegelements wird im Wesentlichen quer zur Strömungsrichtung gemessen. Das heisst, die Breite erstreckt sich im Wesentlichen in einer Ebene, die normal zur Länge des Stegelements verläuft und den Querschnitt des Stegelements zeigt. Der Querschnitt des Stegelements wird durch dessen Breite und dessen Dicke charakterisiert. Die Länge zumindest des längsten Stegelements ist mindestens 5-mal so gross wie dessen Breite.

Die Breite des Stegelements ist 0.5 bis 5-mal so gross wie dessen Dicke, vorteilhafterweise 0.75 bis 3-mal so gross wie dessen Dicke. Wenn die Breite des Stegelements 1 bis 2 mal so gross wie dessen Dicke ist, ergibt sich ein besonders bevorzugter Bereich, der eine besonders gute Quervermischung aufweist. Die Breite des Stegelements wird als Normalabstand definiert, welcher sich von der ersten Kante und der zweiten Kante des Stegelements erstreckt auf der Anströmseite. Die Breite des Stegelements auf der Anströmseite kann sich von der Breite gemessen auf der Abströmseite des Stegelements unterscheiden.

Unter einer Kante wird die vom Fluid angeströmte und umströmte Kante des Stegelements verstanden, welche sich im Wesentlichen parallel zur Länge des Stegelements erstreckt. Die Dicke des Stegelements kann variabel sein. Dabei liegt die minimale Dicke, um weniger als 75% und vorteilhafterweise um weniger als 50% unter der maximalen Dicke. Die Variationen können beispielsweise durch Rippen, durch Einbuchtungen, durch Noppen, durch keilförmige Stege oder einer andere Unebenheit bedingt sein.

Das Stegelement ist dadurch charakterisiert, dass in der Strömungsrichtung ebene Flächen oder konkave Flächen vorliegen, die eine Angriffsfläche für das strömende Fluid bieten. Diese in Strömungsrichtung ausgerichteten Flächen bewirken, dass gegenüber einem Rohrelement ein erhöhter Abströmwiderstand entsteht. Es hat sich gezeigt, dass ein Rohrelement eine geringe Mischwirkung hat. Ein Rohrelement ist als Lösung in der US 4 865 460 beschrieben. In der Praxis weist das Rohrelement einen gegenüber Stegen deutlich schlechteren Mischeffekt auf. Auch in der EP 1 384 502 A1 wird auf die geringe Mischwirkung von in der Strömung befindlichen angeströmten runden Profilen hingewiesen.

Der Kanal, der im Inneren des Stegelements verläuft, hat vorzugsweise einen Innendurchmesser, der maximal 75% der Dicke des Stegelements entspricht. Grundsätzlich können auch mehrere im Wesentlichen parallel verlaufende Kanäle in einem Steg angebracht sein.

Der Übergang von zumindest einem der ersten und zweiten Enden des Stegelements zu dem jeweils korrespondierenden Kanal im Mantelkörper des Mantelelements erfolgt spaltfrei. Die Stegelemente des Mischereinsatzes sowie das Mantelelement bestehen demnach aus einem einzigen Bauteil, welches vorzugsweise durch ein Giessverfahren hergestellt ist. Charakteristisch für die Eigenschaft, dass der Übergang spaltfrei ist, ist ein fliessender Übergang vom Stegelement zum Mantelelement. Insbesondere können im Übergangsbereich vom Stegelement zum Mantelelement an den Kanten Rundungen vorgesehen sein, sodass der Fluss des giessfähigen Materials während des Herstellungsverfahrens nicht beeinträchtigt wird.

Die Kanäle verlaufen im Inneren der Stegelemente, sodass keine Verbindung zwischen den Kanälen im Inneren der Stegelemente und dem Mischraum, welcher die Stegelemente umgibt, besteht.

In einem Giessverfahren wird mindestens segmentweise eine monolithische Struktur bestehend aus gegenüber der Fluidhauptströmungsrichtung in einem Winkel ungleich null angeordneten ersten und zweiten Gruppe von Stegelementen und einem fest mit zumindest einem Teil der Stegelemente verbundenen Mantelelement, welches als Ummantelungsrohr ausgebildet sein kann, hergestellt. Die Stegelemente weisen mindestens teilweise Kanäle auf, die im Betriebszustand von einem Wärmeträgerfluid durchströmbar sind. Die Kanäle stehen im Betriebszustand nicht in Verbindung mit dem fliessfähigen Medium, welches die Stegelemente umströmt. Die Kanäle erstrecken sich von einem ersten Ende des Stegelements zu einem zweiten Ende des Stegelements. Das Mantelelement enthält je einen korrespondierenden Kanal der mit dem ersten Ende und zweiten Ende des Stegelements in fluidleitender Verbindung steht, wobei der Übergang von zumindest einem der ersten und zweiten Enden des Stegelements zu dem jeweils korrespondierenden Kanal im Mantelelement spaltfrei erfolgt. Die Länge des Kanals ist grösser als der mittlere Durchmesser des Mantelelements, wenn das Stegelement die Längsachse enthält.

Die Kanäle für das Wärmeträgerfluid in den Stegelementen können durch den Giessprozess hergestellt werden, aber auch durch nachträgliches Bearbeiten wie Erodieren oder Bohren erfolgen. Es hat sich erstaunlicherweise gezeigt, dass das direkte Giessen der Kanäle oder ein nachträgliches Bohren der Kanäle sehr einfach und kostengünstig möglich ist.

Beim Giessverfahren wird eine Gussform mittels einem Wachskörper, Aufbringen einer keramischen Hülle auf den Wachskörper, anschliessendem Entfernen des Wachses und Brennen der keramischen Hülle hergestellt und gebrannte die keramische Hülle mit giessfähigem Material befüllt. Das giessfähige Material wird durch Abkühlen verfestigt und die keramische Hülle nach der Verfestigung des giessfähigen Materials entfernt. Die Vorrichtung kann aus beliebigen Materialien, die im Giessverfahren verarbeitet werden können, wie zum Beispiel Metall, Kunststoff oder Keramik hergestellt werden. Die Stegelemente sind vorteilhafterweise rechteckig ausgeführt, wobei die Kanten auch abgerundet sein können. Die Stegelemente können aber auch eine andere Querschnittsform aus der Gruppe der Kreise, Ellipsen, abgerundeten Vierecke oder Vielecke aufweisen. Die Querschnittflächen können in einem einzelnen Stegelement oder zwischen mehreren Stegelementen unterschiedlich sein, so können zum Beispiel die Stegelementdicke oder die Stegelementbreite variieren. Als Mantelelement wird eine Ummantelung des Mischereinsatzes mit beliebigem Querschnitt und Geometrie verstanden, enthaltend also zum Beispiel auch ein Rohr oder einen rechteckigen Kanal.

Ein Wärmeträgerfluid kann eine beliebige Flüssigkeit wie zum Beispiel Wasser oder Öle aber auch ein Gas, wie Luft, umfassen. Die Stegelemente sind dabei vorteilhafterweise in einem Winkel von ungefähr 25 bis 75 Grad und noch vorteilhafter in einem Winkel von ungefähr 30 bis 60 Grad zur Fluidhauptströmungsrichtung angeordnet.

Nach einem Ausführungsbeispiel kreuzen sich die ersten und zweiten Gruppenebenen. Nach einem weiteren Ausführungsbeispiel schliesst sich ein Stegelement der ersten Gruppe an ein Stegelement der zweiten Gruppe an. Benachbarte Stegelemente haben demzufolge gemäss diesem Ausführungsbeispiel eine unterschiedliche Ausrichtung, da sie zu verschiedenen Gruppen gehören.

Nach einem bevorzugten Ausführungsbeispiel kreuzen sich benachbarte Stegelemente, da sich derart der Mischeffekt erhöhen lässt. Der Winkel zwischen zwei sich kreuzenden Stegelementen beträgt vorteilhafterweise 25 bis 75 Grad. In einer Gruppe können dabei beliebig viele Stegelemente nebeneinander angeordnet werden. Die Gruppe ist dadurch gekennzeichnet, dass die Mittenachsen sämtlicher Stegelemente dieselbe oder im wesentlichen dieselbe Gruppenebene aufspannen. Insbesondere werden 2 bis 20 Stegelemente besonders bevorzugt 4 bis 12 Stegelemente parallel in einer Gruppe angeordnet.

Es können beliebig viele Gruppen von Stegelementen in Fluidhauptströmungsrichtung gesehen hintereinander angeordnet werden. Die hintereinander angeordneten Gruppen werden vorteilhafterweise derart angeordnet, dass sie überlappen, um so viel aktive Wärmeaustauschfläche in einem kleinen Apparatevolumen unterzubringen. Als Überlappen wird verstanden, dass mindestens ein Teil der Stegelemente einer ersten Gruppe und ein Teil der Stegelemente einer nachfolgenden Gruppe und/oder einer vorhergehenden Gruppe im gleichen Rohrabschnitt angeordnet sind, in Fluidhauptströmungsrichtung gesehen. Die Projektion der Länge des Stegelements auf die Längsachse ergibt eine Länge L1 und die Projektion des überlappenden Teils der Stegelemente der benachbarten Gruppe auf die Längsachse ergibt eine Länge L2, wobei L2 kleiner als L1 ist und L2 grösser 0 ist. Der betrachtete Rohrabschnitt wird dabei so definiert, dass er die Länge L1 aufweist, das heisst sich von einem zentral angeordneten Stegelement von dessen ersten Ende zu dessen zweiten Ende in der Projektion auf die Längsachse erstreckt.

Da die Mischwirkung in gleich ausgerichteten hintereinander angeordneten Gruppen von Stegelementen nur in einer Ebene stattfindet, wird nach einer gewissen Anzahl von Gruppen die Ausrichtung derart geändert, dass die Gruppen vorteilhafterweise zueinander versetzt angeordnet sind. Insbesondere werden zwei bis einschliesslich 20 Gruppen vorgesehen, besonders bevorzugt 4 bis einschliesslich 8 Gruppen. Die Versetzung zwischen den gleich ausgerichteten Gruppen erfolgt vorteilhafterweise um einen Winkel von 80 bis 100 Grad. Das heisst, dass die zweite Gruppe um die Mischereinsatzhauptachse um einen Winkel von 80 bis 100 Grad bezogen auf die erste Gruppe ausgerichtet ist.

Zusätzlich zu den vorgehend beschriebenen Gruppen von sich kreuzenden Stegelementen können speziell im Abschlussbereich von gleich ausgerichteten parallelen Gruppen von Stegelementen auch Gruppen angeordnet sein, die Stegelemente enthalten, die sich nur von der Innenwand des Mantelelements bis zur Kreuzungslinie mit der jeweils anderen Gruppe erstrecken. Nachfolgend werden diese Gruppen als halbe sich kreuzende Steggruppen bezeichnet. Diese Gruppen führen zu einer zusätzlichen Steigerung der Mischleistung. Durch die bessere Mischwirkung und die zusätzliche Wärmeleitung des Stegmaterials wird auch der Wärmeaustausch zusätzlich erhöht.

Die Stegelemente in einer ersten und zweiten Gruppe können sich gegenseitig berühren oder aber Zwischenräume aufweisen. Auch eine Verbindung der Zwischenräume mit quer zur Fluidströmungsrichtung angeordneten Verbindungsstegen ist möglich.

Das Wärmeträgerfluid wird vorteilhafterweise über einen Doppelmantel zugeführt und durchfliesst diesen wie auch mindestens einen Teil der sich kreuzenden Stegelemente. Dadurch kann nicht nur die Oberfläche der Innenwandung des Mantelelements, sondern auch die Oberfläche der gewärmten oder gekühlten Stegelemente als Wärmeaustauschfläche genutzt werden. Der Doppelmantel kann auf der Innenseite durch ein Ummantelungsrohr und aussenseitig durch ein zweites Aussenrohr gebildet sein. Im Aussenrohr sind Anschlüsse für die Zuführung und Abführung des Wärmeträgerfluids angebracht. Zwischen Ummantelungsrohr und Aussenrohr sind vorteilhafterweise Leitbleche angebracht, welche das Wärmeträgerfluid im Doppelmantel und durch die Stegelemente leiten, so dass die Vorrichtung möglichst gleichmässig durchströmt wird. Es können auch verschiedene Abschnitte oder Segmente der erfindungsgemässen Vorrichtung durch getrennte Doppelmantelsegmente mit Wärmeträgerfluid durchströmt werden. Dies erlaubt eine unterschiedliche Temperaturführung in den einzelnen Segmenten. Das Wärmeträgerfluid kann auch direkt von aussen in die Stegelemente zugeführt werden. Dadurch wird allerdings die Nutzung des Ummantelungsrohrs als Wärmeübertragungsfläche eingeschränkt. Es hat sich gezeigt, dass für eine hohe Wärmeübertragung in einem kleinen Apparatevolumen bei Ummantelungsrohrdurchmessern von 60 mm und mehr mindestens die Hälfte aller Stegelemente mit dem Wärmeträgerfluid durchströmt werden sollten.

Es hat sich gezeigt, dass mit dem Giessverfahren ein sehr kostengünstiges Herstellungsverfahren von Stegelementen und einem spaltfrei monolithisch mit den Stegelementen verbundenen Mantelelement möglich ist. Es kann dabei das gesamte Mantelelement mit den entsprechenden Stegelementen monolithisch hergestellt werden oder aber einzelne Segmente hergestellt werden, die dann nachträglich zum Beispiel durch Schweissen oder geschraubte Flanschverbindungen verbunden werden. Des Weiteren lassen sich beim Giessverfahren die Aussengeometrie der Stegelemente und die Kanalgeometrie für das Wärmeträgerfluid leicht entkoppeln. So können für die Aussengeometrie vorteilhafterweise rechteckige Profile verwendet werden und die Kanalgeometrie kann vorteilhafterweise als ein runder Querschnitt, das heisst insbesondere ein kreisförmiger oder ovaler Querschnitt gewählt werden. Es können so Stegelemente mit idealem Profil für die Quervermischung und gleichzeitig hoher Eigenfestigkeit für grosse maximale Fluiddrücke hergestellt werden. Es hat sich gezeigt, dass die Durchgänge in den Stegelementen für das Wärmeträgerfluid vorteilhaft nach dem Giessprozess durch Erodieren und noch vorteilhafter durch Bohren hergestellt werden. So können auch kleinste Kanäle hergestellt werden.

Es hat sich des Weiteren gezeigt, dass mit den erfindungsgemässen Gruppen von Stegelementen und speziell mit Gruppen, in denen sich benachbarte Stegelemente kreuzen, und/oder speziell mit überlappenden Gruppen von Stegelementen eine sehr gute Mischleistung erzeugt werden kann. Insbesondere kann die Anordnung einer zweiten Gruppe, die um 80 bis 100 Grad zur ersten Gruppe versetzt ist, für eine schnelle Mischung förderlich sein. Überraschenderweise hat sich auch gezeigt, dass speziell das Anbringen von zusätzlichen Teilgruppen und speziell bei viskosen Fluiden eine weitere Verbesserung der Mischungsleistung, das heisst eine erhöhte Mischgüte erzielbar ist.

Da das Wärmeträgerfluid im Innenraum des Doppelmantels und in den Stegelementen fliesst, wird die Mischleistung nicht durch zusätzliche Einbauten von mit Wärmeträgerfluid durchströmten Rohren behindert. Auch die Mischleistung im Randbereich ist durch den direkten Übergang der Stegelemente in das Mantelelement wesentlich verbessert, da auch an der Innenwand befindliche Grenzschichten des fliessfähigen Mediums zur Erzielung einer homogenen Mischung beteiligt sind. Insbesondere kann nicht nur eine optimale Erneuerung der Grenzschichten zwischen fliessfähigem Medium und Mantelelement sondern auch zwischen fliessfähigem Medium und Stegelementoberfläche erzeugt werden. Die optimale Grenzschichterneuerung führt auch zu einer optimalen Nutzung der Wärmeaustauschfläche. Die optimale Nutzung der Wärmeaustauschfläche führt auch dazu, dass die Vorrichtung für eine gegebene Kühl- oder Heizaufgabe mit sehr kleinem Apparatevolumen und mit sehr kleinem Druckverlust gebaut werden kann.

Dank der optimalen Mischwirkung zeigt die erfindungsgemässe Vorrichtung auch ein sehr enges Verweilzeitspektrum des zu heizenden oder kühlenden fliessfähigen Mediums. Dadurch können Ablagerungen oder Zersetzung von fliessfähigem Medium bestmöglich verhindert werden. Bei Kühlaufgaben, welche die Kühlung von viskosen Fluiden betreffen, wie zum Beispiel einem Polymer, kann dank der optimalen Erneuerung der Grenzschichten eine sehr niedrige Schmelzetemperatur nahe am Einfrierpunkt erreicht werden. Hierdurch insbesondere wird vermieden, dass sich verfestigtes Polymer an den Wärmeaustauschflächen ablagert. Der direkte Übergang der einzelnen Stegelemente in das Mantelelement führt zu einer sehr stabilen Konstruktion, die sich auch für die Betriebsweise mit hohen Fluidbetriebsdrücken eignet. Dadurch kann die erfindungsgemässe Vorrichtung speziell beim Betrieb mit viskosen Fluiden sehr kompakt gebaut werden. Die Vorrichtung eignet sich grundsätzlich zum Mischen und Kühlen respektive Heizen von beliebigen fliessfähigen Medien wie Flüssigkeiten und Gasen, speziell aber für viskose und sehr viskose Fluide wie beispielsweise Polymere.

Das Mantelelement sowie der Mischereinsatz bestehen insbesondere aus giessfähigen Materialien, beispielsweise können Metalle, Keramik, Kunststoffe oder Kombinationen dieser Materialien zum Einsatz kommen.

Ein Treibmittel kann mittels einer Treibmittelzugabevorrichtung zumindest einem der ersten oder zweiten Extrudern oder der Transferleitung zugegeben werden.

Nachfolgend wird die erfindungsgemässe Vorrichtung anhand einiger Ausführungsbeispiele dargestellt. Es zeigen
Fig. 1: ein zweidimensionales Schnittbild durch ein erstes Ausführungsbeispiel eines Mischereinsatzes der erfindungsgemässen Vorrichtung,
Fig. 2: ein dreidimensionales Schnittbild durch die Vorrichtung gemäss Fig. 1,
Fig. 3: eine Ansicht des Mischereinsatzes für die Vorrichtung gemäss Fig. 1,
Fig. 4: ein dreidimensionales Schnittbild einer Vorrichtung nach einem zweiten Ausführungsbeispiel,
Fig. 5: ein Detail des Übergangs vom Stegelement zum Mantelelement aus Fig. 1,
Fig. 6: ein zweidimensionales Schnittbild eines dritten Ausführungsbeispiels einer erfindungsgemässen Vorrichtung,
Fig. 7: ein zweidimensionales Schnittbild eines vierten Ausführungsbeispiels einer erfindungsgemässen Vorrichtung,
Fig. 8: eine Ansicht eines Mischereinsatzes nach einem fünften Ausführungsbeispiel einer erfindungsgemässen Vorrichtung,
Fig. 9: eine erste Variante einer Extrusionsanordnung mit einem Mischereinsatz,
Fig. 10 eine zweite Variante einer Extrusionsanordnung mit einem Mischereinsatz,
Fig. 11 eine dritte Variante einer Extrusionsanordnung mit einem Mischereinsatz ,
Fig. 12 eine vierte Variante einer Extrusionsanordnung mit einem Mischereinsatz

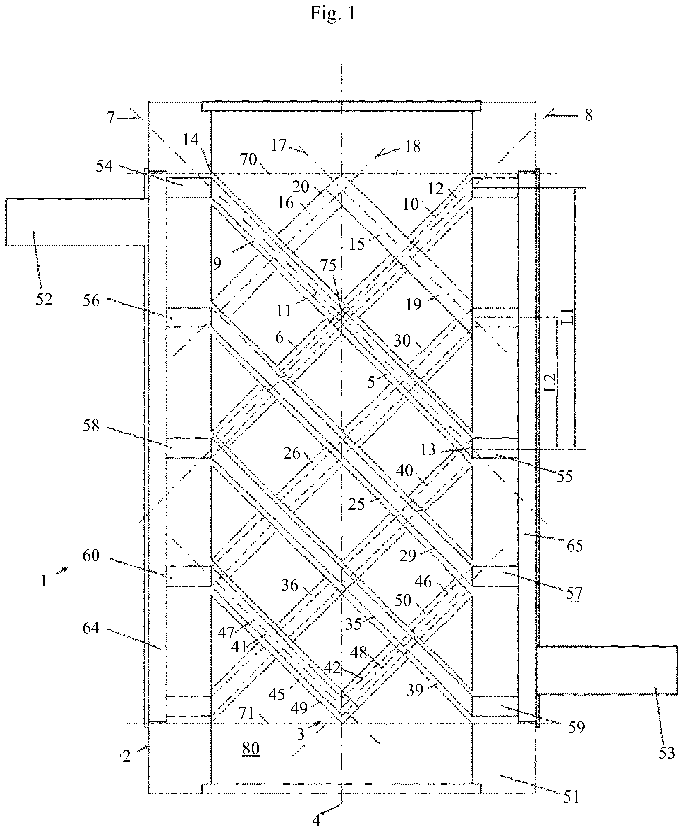

Die Vorrichtung 1 zum statischen Mischen und Wärmeaustausch besteht aus einem Mantelelement 2 und einen Mischereinsatz 3, wobei der Mischereinsatz 3 im Betriebszustand im Inneren des Mantelelements 2 angeordnet ist. Der Mischereinsatz 3 hat eine Längsachse 4, die sich im Wesentlichen in Hauptströmungsrichtung des fliessfähigen Mediums erstreckt, welches das Mantelelement 2 im Betriebszustand durchströmt. Der Mischereinsatz umfasst eine erste Gruppe 5 von Stegelementen sowie eine zweite Gruppe 6 von Stegelementen. In Fig. 1 sind weiteres die erste Gruppe 15, die zweite Gruppe 16, die erste Gruppe 25, die zweite Gruppe 26, die erste Gruppe 35, die zweite Gruppe 36, sowie die erste Gruppe 45 und die zweite Gruppe 46 gezeigt. Bis auf die Gruppenpaare 15, 16 und 45, 46 sind alle Gruppenpaare gleich aufgebaut. Daher gilt die nachfolgende Beschreibung für die ersten Gruppen 5, 25, 35 sowie die zweiten Gruppen 6, 26, 36. Jede Gruppe kann eine Mehrzahl von Stegelementen umfassen. Je nach der Grösse des Mischraums 80 und/oder der Breite der Stegelemente können 2 bis 20, vorzugsweise 4 bis 12 Stegelemente einer Gruppe parallel zueinander angeordnet sein. Unter der Länge eines Stegelements wird die Abmessung vom ersten Ende 13 bis zum zweiten Ende 14 des Stegelements entlang seiner Mittenachse verstanden. Unter der Dicke des Stegelements wird die Abmessung normal zur Mittenachse von einer Kante zur gegenüberliegenden Kante verstanden. Unter der Breite des Stegelements wird dessen Abmessung quer zur Längsachse 4 verstanden, also die Abmessung, die in Fig. 1 normal zur Zeichnungsebene liegt.

Die erste Gruppe 5 von Stegelementen erstreckt sich entlang einer gemeinsamen ersten Gruppenebene 7. Die Gruppenebene 7 enthält die Längsachse eines im Inneren des Stegelements 9 verlaufenden Kanals 11, wenn der Kanal derart angeordnet ist, dass seine Längsachse mit der Mittenachse des Stegelements zusammenfällt. In der vorliegenden Darstellung verläuft die Gruppenebene 7 normal zur Zeichnungsebene.

Die zweite Gruppe 6 von Stegelementen erstreckt sich entlang einer zweiten gemeinsamen Gruppenebene 8. Die Gruppenebene 8 ist in gleicher Weise definiert wie die Gruppenebene 7. Die ersten und zweiten Gruppenebenen 6, 7 kreuzen sich. In der vorliegenden Darstellung kreuzen sie sich genau auf der Längsachse 4 des Mischereinsatzes. Ein Stegelement 9 der ersten Gruppe schliesst an ein Stegelement 10 der zweiten Gruppe an. Das Stegelement 9 ist somit kreuzweise zum Stegelement 10 angeordnet. Die Stegelemente der ersten Gruppe wechseln somit mit den Stegelementen der zweiten Gruppe ab. Das Stegelement 9 ist entlang seiner Längsachse geschnitten, sodass eine Hälfte des Kanals 11 sichtbar ist. Das Stegelement 10 befindet sich in Bezug auf die Zeichnungsebene hinter dem Stegelement 9. Es ist daher nicht geschnitten und der durch das Stegelement 10 verlaufende Kanal 12 ist nur mittels einer strichlierten Linie dargestellt. Der Kanal 11 des Stegelements 9 der ersten Gruppe verläuft von einem ersten Ende 13 zu einem zweiten Ende 14 des Stegelements. Der Kanal 11, 12 kann eine Querschnittsfläche in der Form eines Rundelements aufweisen. Das Rundelement ist aus der Gruppe der Kreise, Ellipsen, abgerundeten Vierecke oder Vielecke erhältlich.

Der Mischereinsatz und das Mantelelement 2 gemäss Fig. 1 sind als monolithische Struktur im Giessverfahren hergestellt. Das Mantelelement 2 ist aus einem Mantelkörper 51 aufgebaut, der einen Zulaufstutzen 52 und einen Ablassstutzen 53 für ein Wärmeträgerfluid enthält. Der Mantelkörper enthält einen Verteilerkanal 64 für die Verteilung des Wärmeträgerfluids auf eine Mehrzahl von Zuleitungskanälen und einen Sammelkanal 65 für die Zusammenführung des Wärmeträgerfluids von einer Mehrzahl an Ableitungskanälen. Beispielsweise steht je ein Zuleitungskanal 54 und ein Ableitungskanal 55 mit dem ersten und zweiten Ende 13, 14 des Stegelements in fluidleitender Verbindung. Für jedes der Stegelemente, die Kanäle enthalten, ist ein Zuleitungskanal 56, 58, 60 vorgesehen, welcher das Wärmeträgerfluid dem entsprechenden Kanal im Stegelement zuführt und ein Kanal 57, 59 welcher das Wärmeträgerfluid vom Kanal im Stegelement in den Sammelkanal 65 des Mantelkörpers 51 leitet. In Fig. 1 sind die Stegelemente 9, 29, 39, 49 geschnitten dargestellt, die Stegelemente 10, 20, 30, 40, 50 liegen in der Zeichnungsebene dahinter. Die Kanäle in diesen Stegelementen sind nicht sichtbar, sie sind daher nicht bezeichnet.

Der Übergang von zumindest einem der ersten und zweiten Enden 13, 14 des Stegelements 11 zu dem jeweils korrespondierenden Kanal 54, 55 im Mantelkörper 51 des Mantelelements 2 erfolgt spaltfrei. Die Stegelemente des Mischereinsatzes 3 sowie das Mantelelement 2 bestehen demnach aus einem einzigen Bauteil, welches vorzugsweise durch ein Giessverfahren hergestellt ist.

Das Verfahren zur Herstellung einer Vorrichtung 1 zum Mischen und Wärmetausch wie sie in Fig. 1 dargestellt ist, welche einen Mischereinsatz 3 und ein Mantelelement 2 enthält, erfolgt mindestens segmentweise als monolithische Struktur im Giessverfahren. Die monolithische Struktur umfasst eine gegenüber der Fluidströmungsrichtung in einem Winkel ungleich null angeordneten ersten und zweiten Gruppe 5,6 von Stegelementen 9, 10 und einem fest mit zumindest einem Teil der Stegelemente verbundenen Mantelelement 2. Die Stegelemente 9, 10 haben Kanäle 11, 12. Diese Kanäle werden im Betriebszustand von einem Wärmeträgerfluid durchströmt, welches nicht in Verbindung mit dem fliessfähigen Medium steht, welches die Stegelemente umströmt. Beim Giessverfahren wird eine Gussform mittels einem Wachskörper erzeugt, eine keramische Hülle auf den Wachskörper aufgebracht und anschliessend das Wachs entfernt und die keramische Hülle durch einen Brennvorgang hergestellt sodass die keramische Hülle mit giessfähigem Material befüllt werden kann. Das giessfähige Material wird durch Abkühlen verfestigt und die keramische Hülle nach der Verfestigung des giessfähigen Materials entfernt.

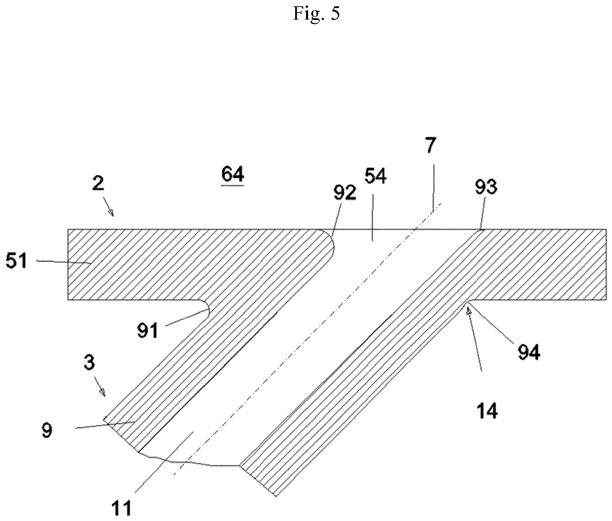

Damit die Stegelemente 9, 10 und die entsprechenden Kanäle 11, 12 im Giessverfahren lunkerfrei hergestellt werden können, werden die Übergänge vom Mantelelement 2 zum Mischereinsatz 3 vorteilhaft mit Rundungen versehen, wie in Fig. 5 im Detail dargestellt ist. Fig. 5 ist eine Vergrösserung des Bereichs um das zweite Ende 14 des Stegelements 9. Sämtliche anderen Enden sind vorteilhafterweise mit gleichartigen Rundungen ausgestaltet. In der Fig. 5 ist eine Rundung 91 dargestellt, welche den Übergang von einer oberen Kante oder Kantenfläche des Stegelements 9 zur Innenseite des Mantelkörpers 51 des Mantelelements bildet. Eine Rundung 94 bildet den Übergang von der unteren Kante oder unteren Kantenfläche des Stegelements 9 zur Innenseite des Mantelkörpers 51 des Mantelelements. Der Übergang vom Kanal 54 zum Kanal 11 erfolgt ebenfalls über einen gerundeten Abschnitt. Eine konvexe Rundung 92 und eine gegenüberliegende konkave Rundung 93 sind im Schnitt dargestellt. Jede der Rundungen 91, 92, 93, 94 kann insbesondere einen Radius von mindestens 0.5 mm aufweisen.

Es können beliebig viele Gruppen von Stegelementen in Fluidströmungsrichtung gesehen hintereinander angeordnet werden. In dem vorliegenden Ausführungsbeispiel ist neben der ersten Gruppe 5 eine Mehrzahl von ersten Teilgruppen 25, 35 gezeigt. Die Gruppe 5 wurde stellvertretend für die ersten Teilgruppen 25, 35 beschrieben. Die ersten Teilgruppen 25, 35 sind gleich aufgebaut wie die Gruppe 5 und daher steht die Beschreibung der Gruppe 5 auch stellvertretend für die Gruppen 25, 35. In gleicher Weise ist neben der zweiten Gruppe 6 eine Mehrzahl von Teilgruppen 26, 36 gezeigt. Auch die zweite Gruppe 6 wird stellvertretend für die zweiten Teilgruppen 26, 36 beschrieben. Die zweiten Teilgruppen 26, 36 sind gleich aufgebaut wie die zweite Gruppe 6.

Des Weiteren ist in Fig. 1 auch eine erste Teilgruppe 15 und eine zweite Teilgruppe 16 gezeigt, deren Stegelemente keinen Kanal enthalten. Somit können ein Teil der Stegelemente keinen Kanal enthalten. Zudem erstreckt sich das Stegelement 19 der ersten Teilgruppe 15 nur vom Mantelkörper 51 bis zur Längsachse 4. Das Stegelement 20 der zweiten Teilgruppe 16 erstreckt sich ebenfalls nur vom Mantelkörper 51 zur Längsachse 4. Die beiden ersten und zweiten Gruppenebenen 17, 18 der Stegelemente 19, 20 kreuzen sich auf der Längsachse 4. Die erste Teilgruppe 15 und die zweite Teilgruppe 16 bilden ein rechtsseitiges Ende des Mischereinsatzes aus. Das rechtsseitige Ende ist durch eine Endebene 70 gekennzeichnet, die eine Normalebene zur Längsachse ist und durch die rechtsseitigen Endpunkte der Stegelemente 19, 20 verläuft. Sie bildet den rechtsseitigen Abschluss des Mischereinsatzes aus. Rechtsseitig von der Endebene 70 kann ein weiterer Mischeinsatz anschliessen. Insbesondere kann der Mischereinsatz eine erste Gruppe von Stegelementen und eine zweite Gruppe von Stegelementen enthalten, wobei die erste Gruppe von Stegelementen zur ersten Gruppe 5 um einen Winkel zwischen 80 und 100 Grad um die Längsachse verdreht ist und die zweite Gruppe von Stegelementen zur ersten Gruppe 6 um einen Winkel zwischen 80 und 100 Grad um die Längsachse verdreht ist. Dieser weitere Mischeinsatz ist zeichnerisch nicht dargestellt.

Würden daher die erste Teilgruppe 15 und die zweite Teilgruppe 16 fehlen, ergäbe sich eine Lücke, welche dem fliessfähigen Medium weniger Umlenkungsmöglichkeiten bieten würde und demzufolge eine weniger gute Mischung des fliessfähigen Mediums zur Folge hätte.

Nach einer Variante können die das Ende des Mischereinsatzes ausbildenden Teilgruppen auch Kanäle enthalten, damit zusätzlich der Wärmeaustausch verbessert ist. Daher ist in Fig. 1 auch eine erste Teilgruppe 45 und eine zweite Teilgruppe 46 gezeigt, deren Stegelemente 49, 50 je einen Kanal 41, 42 enthalten. Die Kanäle 41, 42 benachbarter Stegelemente können verbunden sein, sodass das Wärmeträgerfluid vom Zuleitungskanal 60 zu einem Ableitungskanal gelangt, der hinter dem Ableitungskanal 57 angeordnet ist und daher in der Darstellung nicht sichtbar ist. Zudem erstreckt sich das Stegelement 49 der ersten Teilgruppe 45 nur vom Mantelkörper 51 bis zur Längsachse 4. Das Stegelement 50 der zweiten Teilgruppe 46 erstreckt sich ebenfalls nur vom Mantelkörper 51 zur Längsachse 4. Die beiden ersten und zweiten Gruppenebenen der Stegelemente 49, 50 kreuzen sich auf der Längsachse 4. Die erste Teilgruppe 45 und die zweite Teilgruppe 46 bilden ein in der Darstellung der Fig. 1 linksseitiges Ende des Mischereinsatzes aus. Das linksseitige Ende ist durch eine Endebene 71 gekennzeichnet, die eine Normalebene zur Längsachse 4 ist und durch die linksseitigen Endpunkte der Stegelemente 49, 50 verläuft. Sie bildet den linksseitigen Abschluss des Mischereinsatzes aus. Linksseitig von der Endebene 71 kann ein weiterer Mischeinsatz anschliessen.

Das heisst, die Gruppenebene 7 der ersten Gruppe 5 kreuzt sich mit der zweiten Gruppenebene 8 der zweiten Gruppe 6 derart, dass eine gemeinsame Kreuzungslinie 75 ausgebildet wird, welche einen Schnittpunkt mit der Längsachse 4 hat oder im Wesentlichen quer zur Längsachse verläuft und/oder in einer Normalebene zur Kreuzungslinie, welche die Längsachse enthält, einen minimalen Abstand zur Längsachse aufweist. Durch diese Anordnung haben die Stegelemente eine in Bezug auf die Schnittebene symmetrische Konfiguration, sodass die Mischung in dem oberhalb der Längsachse gelegenen Teilbereich des Mischraums 80 im Wesentlichen gleich gut erfolgt wie im unterhalb der Längsachse gelegenen Teilbereich des Mischraums.

Wie vorher beschrieben, zeigt Fig. 1 zwei Gruppen 15, 45, 16, 46 von Stegelementen, die sich nur im Wesentlichen bis zur Kreuzungslinie 75 erstrecken, wodurch gewährleistet ist, dass keine Lücken entstehen, die keine Stegelemente enthalten und in denen die Mischung des fliessfähigen Mediums daher nicht in gleicher Weise erfolgen würde, wie in den mit Stegelementen ausgestatteten Teilen des Mischraums 80.

Nach einem nicht dargestellten Ausführungsbeispiel könnte der Mischereinsatz nur aus einer ersten Gruppe 5 und einer zweiten Gruppe 6 bestehen. Daher werden in der Beschreibung die erste Gruppe 5 und die zweite Gruppe 6 als stellvertretend für eine Mehrzahl weiterer gleichartiger erster oder zweiter Gruppen angesehen. Wie viele Gruppenpaare im Einzelfall vorgesehen sind, hängt von der konkreten Misch- und Wärmeaustauschaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, von dieser Beschreibung mit erfasst sein. Der Einfachheit halber wird die Beschreibung auf eines der Gruppenpaare beschränkt, auf eine Wiederholung der Beschreibung für die allfälligen weiteren Gruppenpaare 25, 35, 26, 36 wird daher verzichtet.

Die Kanäle 11, 12 verlaufen im Inneren der Stegelemente 9, 10 verlaufen, sodass keine Verbindung zwischen den Kanälen im Inneren der Stegelemente und dem Mischraum 80, welcher die Stegelemente umgibt, besteht.

Die erste und zweite Gruppenebene sind in einem Winkel von 25 bis 75 Grad zur Längsachse 4 angeordnet. In der vorliegenden Darstellung beträgt der Winkel 30 bis 60 Grad zur Längsachse 4, in vielen Fällen im Wesentlichen 45 Grad zur Längsachse 4.

Die hintereinander angeordneten Gruppen werden vorteilhafterweise so angeordnet, dass sie überlappen, um so viel aktive Wärmeaustauschfläche wie möglich in dem vom Mantelelement 2 gebildeten Volumen bereitzustellen. Unter Überlappen ist zu verstehen, dass mindestens ein Teil der Stegelemente einer ersten Gruppe und ein Teil der Stegelemente einer nachfolgenden Gruppe und/oder ein Teil der Stegelemente einer vorhergehenden Gruppe im gleichen in Fluidhauptströmungsrichtung gesehenen Rohrabschnitt angeordnet sind. Die Projektion der Länge des Stegelements auf die Längsachse ergibt eine Länge L1 und die Projektion des überlappenden Teils der Stegelemente der benachbarten Gruppe auf die Längsachse ergibt eine Länge L2, wobei L2 kleiner als L1 ist und L2 grösser 0 ist. Der betrachtete Rohrabschnitt wird dabei so definiert, dass er die Länge L1 aufweist, das heisst das Hüllvolumen des zentral angeordneten Stegelements 9 darstellt. Das Hüllvolumen ist bei einem zylinderförmigen Mantelelement mit kreisförmigem Querschnitt ein Hüllzylinder, bei einem Mantelelement mit rechteckigem oder vieleckigem Querschnitt ein Hüllquader.

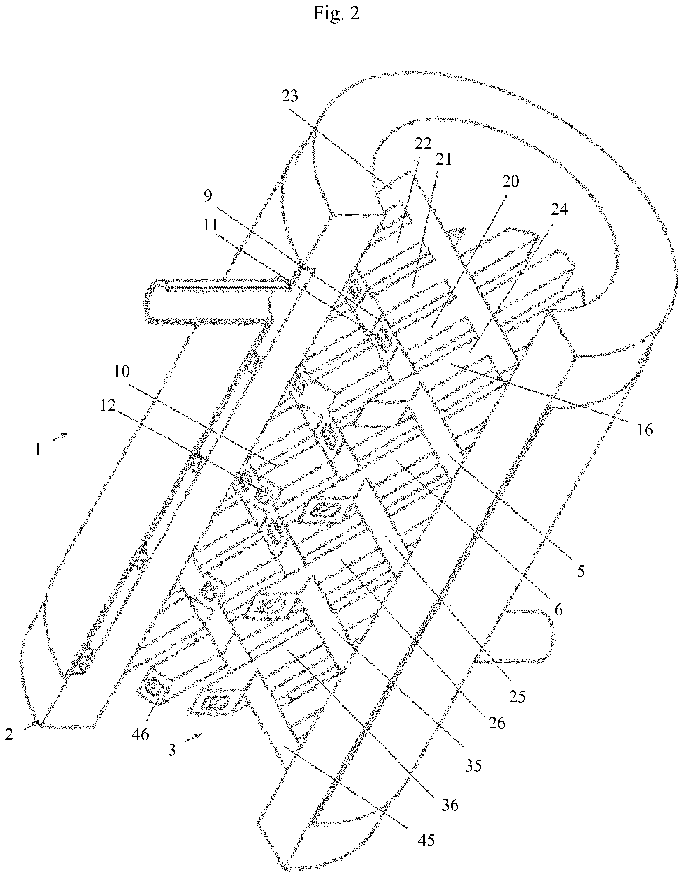

Fig. 2 zeigt ein dreidimensionales Schnittbild durch die Vorrichtung gemäss Fig.1. Gleiche Teile werden in dieser Fig. 2 gleich bezeichnet und nicht mehr beschrieben, soweit die Beschreibung bereits in Zusammenhang mit Fig. 1 vorgenommen worden ist. Fig. 2 zeigt die zu der Gruppe 15 gehörigen Stegelemente 20, 21, 22, 23, 24.

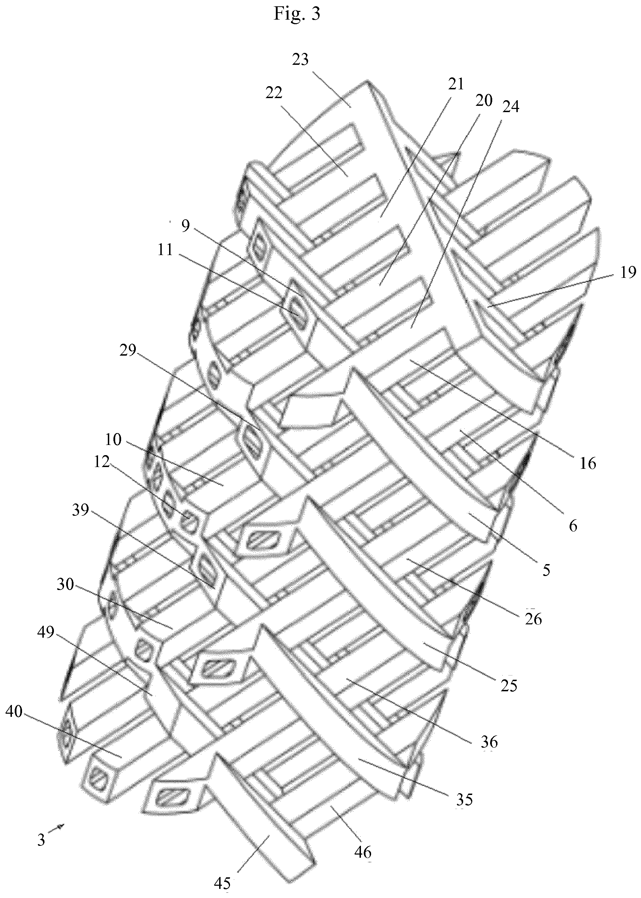

Fig. 3 zeigt eine Ansicht des Mischereinsatzes für die Vorrichtung gemäss Fig. 1. Der Mischereinsatz 3 unterscheidet sich von Fig. 1 nur dahingehend, dass die Gruppen 45, 46 keine Kanäle enthalten.

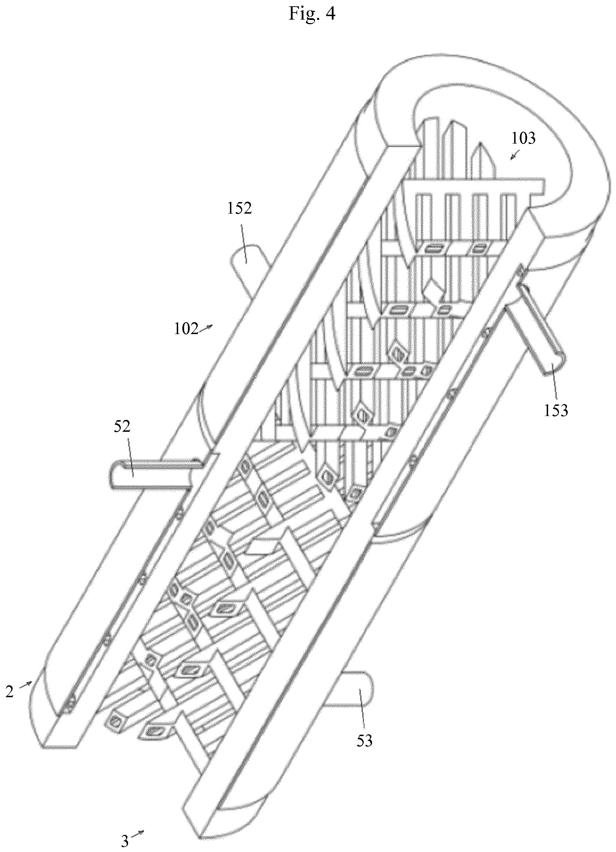

Fig. 4 zeigt ein dreidimensionales Schnittbild einer Vorrichtung nach einem zweiten Ausführungsbeispiel, in welchem ein erster Mischereinsatz 3 und ein zweiter Mischereinsatz 103 in einem ersten Mantelelement 2 und einem zweiten Mantelelement 102 hintereinander angeordnet sind. Das erste Mantelelement 2 und der erste Mischereinsatz 3 sind in Bezug auf das zweite Mantelelement 102 und den zweiten Mischereinsatz 103 um einen Winkel von 90 Grad gedreht. Die Zufuhr von Wärmeträgerfluid zum Mischraum erfolgt über den ersten Zulaufstutzen 52 und dessen Abfuhr über den ersten Ablassstutzen 53. Weil das zweite Mantelelement 102 in seiner Gesamtheit um 90 Grad zum ersten Mantelelement 2 verdreht ist, sind auch die zweiten Zulaufstutzen 152 und Ablassstutzen 153 um 90 Grad gedreht.

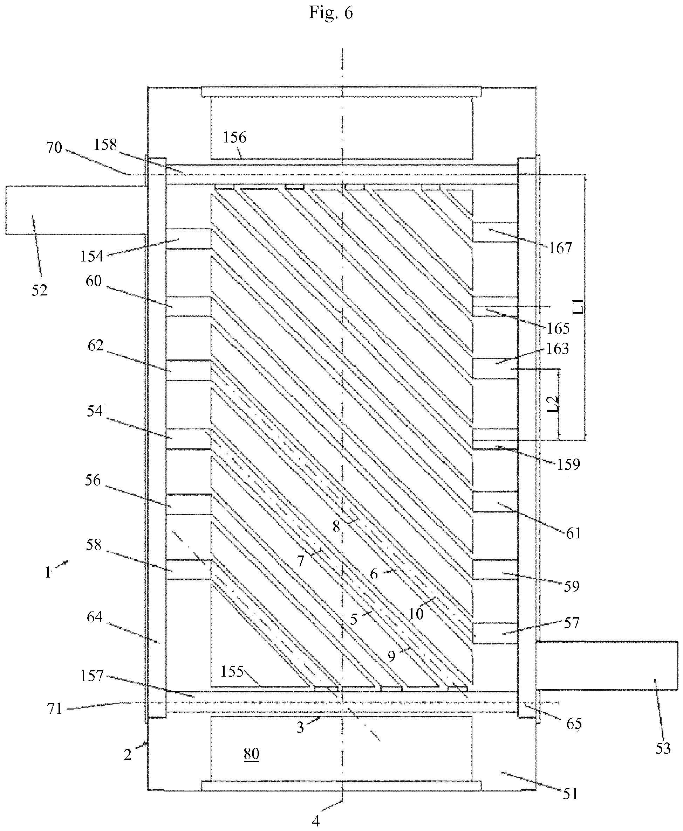

Fig. 6 zeigt ein zweidimensionales Schnittbild eines dritten Ausführungsbeispiels einer erfindungsgemässen Vorrichtung. Die Vorrichtung 1 besteht aus einem Mantelelement 2 und einem Mischereinsatz 3, die eine gemeinsame Längsachse 4 haben.

Entlang der Längsachse 4 erstrecken sich eine erste Gruppe 5 und eine zweite Gruppe 6 von Stegelementen. Die Gruppen sind entlang einer ersten Gruppenebene 7 und einer zweiten Gruppenebene 8 angeordnet. Ein Stegelement 9 der ersten Gruppe ist im Schnitt gezeigt, ebenso wie ein Stegelement 10 der zweiten Gruppe. Die erste und die zweite Gruppenebene verlaufen im Unterschied zu den vorherigen Ausführungsbeispielen im Wesentlichen parallel zueinander. Die Stegelemente, welche in der Endebene 71 enden würden, können mit einem Sammelelement 155 verbunden sein. Insbesondere kann das Sammelelement 155 einen Sammelkanal 157 haben. Die Stegelemente, welche in der Endebene 70 beginnen, können mit einem Verteilelement 156 verbunden sein. Das Verteilelement 156 kann einen Verteilkanal 158 enthalten.

Das Wärmeträgerfluid wird über den Zulaufstutzen einem im Mantelelement 2 befindlichen Verteilerkanal 64 zugeführt. Vom Verteilerkanal 64 gelangt das Wärmeträgerfluid über die Zuleitungskanäle 54, 56, 58, 60, 62, 154 sowie über den Verteilerkanal 158 in die Kanäle der Stegelemente.

Das Wärmeträgerfluid gelangt nach der Durchströmung der Kanäle der Stegelemente in den Sammelkanal 157 sowie in die Ableitungskanäle 57, 59, 61, 63, 159, 161, 163, 165, 167. Von den Ableitungskanälen gelangt das Wärmeträgerfluid in den Sammelkanal 65 und wird über den Ablassstutzen 53 abgeführt. Das fliessfähige Medium strömt um die Stegelemente im Mischraum 80.

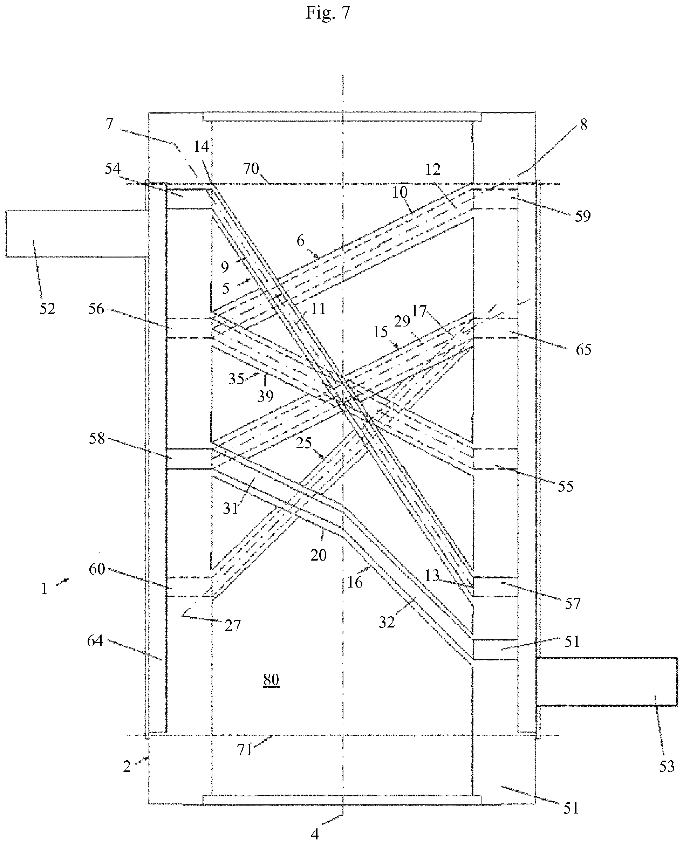

Fig. 7 zeigt ein zweidimensionales Schnittbild eines vierten Ausführungsbeispiels einer erfindungsgemässen Vorrichtung. Dieses Schnittbild zeigt, dass die Anordnung der Stegelemente in beliebigen Winkeln erfolgen kann. Insbesondere ist ein erstes Stegelement 9 einer ersten Gruppe 5 und ein zweites Stegelement 10 einer zweiten Gruppe 6 gezeigt. Eine Mehrzahl gleichartiger oder unterschiedlicher Stegelemente 9 kann entlang der ersten Gruppenebene 7 angeordnet sein. Die hinter dem Stegelement 9 angeordneten Stegelemente dieser Gruppe sind in der vorliegenden Darstellung nicht sichtbar. Der Winkel, welchen die dargestellte Schnittlinie der ersten Gruppenebene 7 in der Zeichnungsebene mit der Längsachse 4 einschliesst, unterscheidet sich von dem Winkel, welchen die dargestellte Schnittlinie der zweiten Gruppenebene 8 in der Zeichnungsebene mit der Längsachse 4 einschliesst. Auch die Stegbreiten der Stegelemente der ersten Gruppe 5 können sich von den Stegbreiten der Stegelemente der zweiten Gruppe 6 unterscheiden.

Benachbarte Gruppen können wahlweise parallele Gruppenebenen aufweisen oder auch unterschiedliche Winkel zur Längsachse 4 einschliessen. Eine Teilgruppe 15 ist gezeigt, deren Gruppenebene 17 parallel zur Gruppenebene 8 verläuft. Als Variante ist eine weitere Teilgruppe 25 gezeigt, deren Gruppenebene 27 nicht parallel zur Gruppenebene 8 verläuft, sondern einen kleineren Winkel mit der Längsachse 4 einschliesst.

Als weitere Variante ist gezeigt, dass mehr als zwei Gruppen sich kreuzen können und auch über gemeinsame Verbindungselemente untereinander verbunden sein können. Die Gruppe 5 kann beispielsweise mit der Teilgruppe 15 und der Teilgruppe 35 über gemeinsame Verbindungselemente verbunden sein. Die Verbindungselemente sind nicht gezeigt, es kann sich beispielsweise um Querstege handeln, welche normal zur Zeichnungsebene verlaufen und beispielsweise Gruppe 5 und Teilgruppe 15 im Bereich des Kreuzungspunkts verbinden. In gleicher Weise kann die Teilgruppe 15 mit der Teilgruppe 35 verbunden sein.

Als weitere Variante ist eine Teilgruppe 16 gezeigt. Die Teilgruppe 16 enthält ein Stegelement 20, welches zwei Stegelementabschnitte 31,32 aufweist. Die beiden Stegelementabschnitte 31, 32 schliessen zueinander einen Winkel ein. Es wäre auch möglich, dass der erste Stegelementabschnitt und der zweite Stegelementabschnitt über einen gekrümmten Abschnitt miteinander verbunden sind, wobei diese Variante zeichnerisch nicht dargestellt ist.

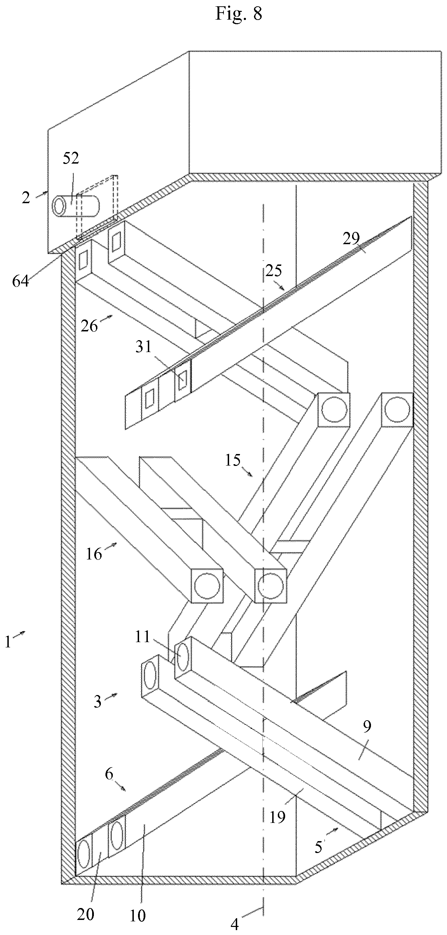

Fig. 8 zeigt eine Ansicht einer Vorrichtung nach einem fünften Ausführungsbeispiel. Die Vorrichtung 1 besteht aus einem Mischereinsatz 3 und einem Mantelelement 2. Dieser Mischereinsatz 3 ist in einem Mantelelement 2 mit viereckiger Querschnittsfläche eingebaut. Andere Querschnittsflächen sind möglich, beispielsweise kreisförmige Querschnittsflächen. Die vorliegende Darstellung zeigt eine erste Gruppe 5 sowie eine zweite Gruppe 6 von Stegelementen. Die Stegelemente 9, 19 der ersten Gruppe 5 sind gleichartig und parallel zueinander angeordnet. Die Stegelemente 10, 20 der zweiten Gruppe 6 sind gleichartig und parallel zueinander angeordnet. Die Stegelemente 9, 19 schliessen einen Winkel mit den Stegelementen 10, 20 ein. Das heisst, gemäss dieser Variante sind benachbarte Stegelemente zumindest teilweise zur selben Gruppe gehörig.

Stromabwärts der ersten Gruppe 5 und der zweiten Gruppe 6 sind eine erste Teilgruppe 15 sowie eine zweite Teilgruppe 16 angeordnet. Die Stegelemente der Teilgruppen 15, 16 sind um die Längsachse 5 um einen Winkel von 90 Grad gedreht, bezogen auf die Stegelemente der ersten und zweiten Gruppen 5, 6. Der Mischereinsatz 3 enthält eine weitere Teilgruppe 25 sowie eine weitere Teilgruppe 26. Diese beiden Teilgruppen 25, 26 sind in Bezug auf die Gruppen 5, 6 um eine Normalebene der Längsachse 4 gespiegelt.

In Fig. 8 sind auch die Kanäle gezeigt, die in den Stegelementen verlaufen. Der Kanal 11 des Stegelements 9 hat ovalen oder kreisförmigen Querschnitt. Die Kanäle können auch andere Querschnittsflächen aufweisen. Durch das Giessverfahren kann eine Vielzahl verschiedener Querschnittsflächen zum Einsatz kommen. Das Stegelement 29 zeigt beispielsweise einen Kanal 31 mit einer viereckigen Querschnittsfläche. Dreieckige oder mehreckige Querschnittsflächen sind in gleicher Weise realisierbar.

Das Mantelelement 2 ist nur teilweise dargestellt. Das Mantelelement 2 enthält einen Zulaufstutzen 52 sowie einen Verteilerkanal 64, welcher teilweise dargestellt ist. Der Verteilerkanal 64 steht in Verbindung mit einem Teil der Kanäle in den Stegelementen. Durch den Verteilerkanal 64 kann ein Wärmeträgerfluid, welches über den Zulaufstutzen zugeführt wird, auf die Kanäle der Stegelemente verteilt werden. Nicht dargestellt ist ein zugehöriger Sammelkanal, welcher mit einem anderen Teil der Kanäle in den Stegelementen verbunden ist. Die dem Verteilerkanal jeweils gegenüberliegenden Enden der Stegelemente münden in den Sammelkanal. Vom Sammelkanal gelangt das Wärmeträgerfluid in den Ablassstutzen und kann über diesen Ablassstutzen die Vorrichtung 1 verlassen.

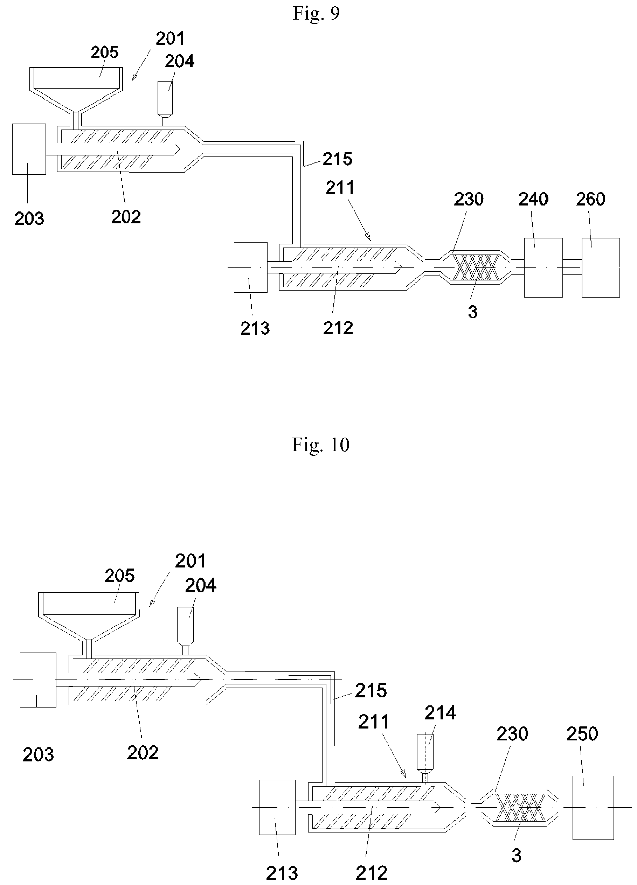

Fig. 9 zeigt eine erste Variante einer Extrusionsanordnung mit einem Mischereinsatz nach einem der vorhergehenden Ausführungsbeispiele. Diese Extrusionsanordnung besteht aus einem ersten Extruder 201, einem zweiten Extruder 211 einer Transferleitung, welche den ersten Extruder 201 mit dem zweiten Extruder 211 verbindet sowie ein Düsenelement 240, durch welches die Kunststoffschmelze die Extrusionsanordnung verlässt. In der vorliegenden Extrusionsanordnung kann ein Verfahren zur Herstellung von niederdichten Schäumen durchgeführt werden. Hierzu wird ein Kunststoff in dem ersten Extruder 201 zu einer Kunststoffschmelze aufgeschmolzen, der Kunststoffschmelze ein Treibmittel über eine Treibmittelzugabevorrichtung 204 zugegeben, danach das Treibmittel in der Schmelze durch Misch- und Dispergiervorgänge im ersten Extruder 201 und/oder einer von einem statischen Mischer 220 gebildeten statischen Mischstrecke oder einer Transferleitung 215 zwischen erstem und einem zweitem Extruder 211 und/oder im zweiten Extruder 211 gelöst wird, danach die mit Treibmittel beladene Schmelze in dem zweiten Extruder 211 gekühlt wird, danach die Schmelze durch einen statischen Mischer 230 geführt wird, wobei der statische Mischer einen Mischereinsatz 3 aufweist, mittels welchem die Temperatur der Schmelze über den ganzen Querschnitt homogenisiert wird und der gleichzeitig gekühlt oder geheizt werden kann, um eine exakte Schmelzetemperatur zu erreichen. Danach wird die temperaturstabilisierte gekühlte Schmelze über ein Düsenelement 240, 250 ausgetragen.

Nach einem Ausführungsbeispiel weist der Mischereinsatz Einbauelemente auf, die in die Schmelze eingreifen und über welche die Schmelze gekühlt oder beheizt werden kann.

Durch den Mischereinsatz 3 wird die Temperatur der Schmelze vorteilhafterweise derart homogenisiert, dass die niedrigste und höchste Temperatur im Schmelzequerschnitt nach dem Mischereinsatz um weniger als 5 Grad Celsius auseinander liegen. Insbesondere kann durch den Mischereinsatz 3 die Temperatur so weit homogenisiert werden, dass niedrigste und höchste Temperatur im Schmelzequerschnitt nach dem Mischereinsatz um weniger als 3 Grad Celsius auseinander liegen, besonders bevorzugt um weniger als 1.5 Grad Celsius auseinander liegen.

Nach einem Ausführungsbeispiel umfasst der Mischereinsatz 3 eine erste Gruppe 5 von Stegelementen sowie eine zweite Gruppe 6 von Stegelementen, wobei die erste Gruppe 5 von Stegelementen sich entlang einer gemeinsamen ersten Gruppenebene 7 erstreckt und die zweite Gruppe 6 von Stegelementen sich entlang einer zweiten gemeinsamen Gruppenebene 8 erstreckt. Insbesondere kann mindestens ein Teil der Stegelemente 9, 10 Kanäle 11,12 aufweisen, wobei die Kanäle sich von einem ersten Ende 13 des Stegelements 11 zu einem zweiten Ende 14 des Stegelements 11 erstrecken, wobei das Mantelelement 2 je einen korrespondierenden Kanal enthält, der mit dem ersten Ende 13 und zweiten Ende 14 des Stegelements in fluidleitender Verbindung steht.

Vorteilhafterweise kann die Schmelzetemperatur nach dem Mischereinsatz über den kühl- und heizbaren Mischereinsatz 3 geregelt werden. Unter Schmelzetemperatur nach dem Mischereinsatz wird die in der Schmelze vorherrschende Temperatur nach deren Austritt aus dem statischen Mischer 230 zum Beispiel kurz vor dem Düsenelement oder in dem Düsenelement verstanden.

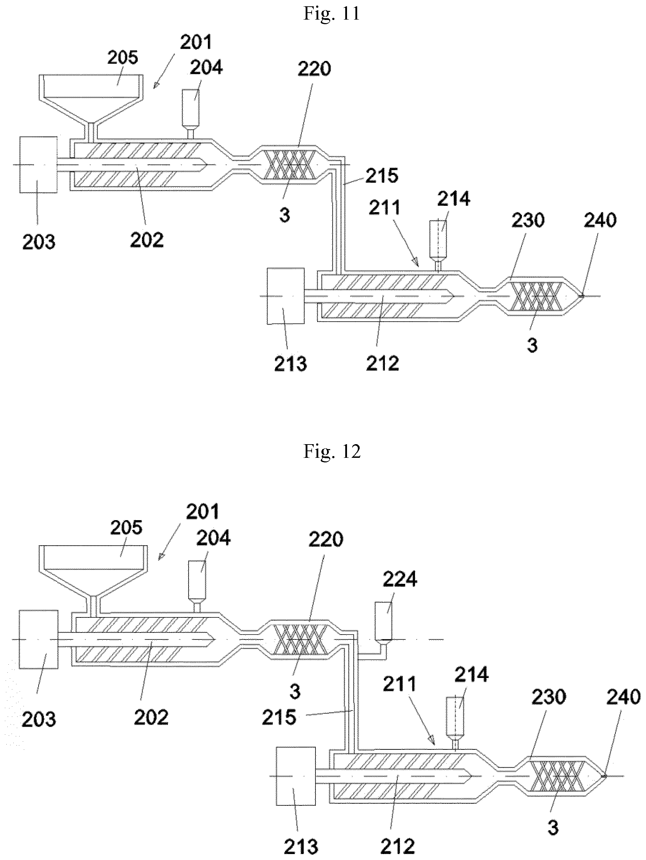

Das Düsenelement nach dem Mischereinsatz kann beispielsweise als Düse 240, wie auch in Fig. 11 gezeigt, oder als Granulator 250 wie in Fig. 10 gezeigt, ausgebildet sein. Im Anschluss an das Düsenelement kann eine Kühlvorrichtung 260 vorgesehen sein, in der das Extrudat bis zur Erstarrung weiter gekühlt wird.

Das Treibmittel kann mittels einer Treibmittelzugabevorrichtung 204 und/oder über die Kunststoffrohmaterialzugabe in den Aufgabebehälter 205 zugegeben werden, welche am ersten Extruder 201 angeordnet ist. Zusätzlich oder alternativ hierzu kann das Treibmittel auch über eine Treibmittelzugabevorrichtung 214 zugegeben werden, welche am zweiten Extruder 211 angeordnet ist, was in Fig. 10 oder Fig. 11 dargestellt wird oder über eine Zugabevorrichtung, die in der Transferleitung 215 angebracht ist.

Somit kann das Treibmittel in die Schmelze in zumindest einen der ersten oder zweiten Extrudern zugegeben werden.

Fig. 10 zeigt eine zweite Variante einer Extrusionsanordnung mit einem Mischereinsatz nach einem der vorhergehenden Ausführungsbeispiele, gemäss welchem dem Düsenelement ein Granulator 250 nachgeschaltet ist. In dem Granulator wird die aus der Austrittsdüse austretende Kunststoffschmelze mittels Schneidelementen zerkleinert. Vor, während oder nach dem Verkleinerungsvorgang wird die Schmelze verfestigt, indem sie gekühlt wird. Hierzu wird die Schmelze beispielsweise durch ein Kühlmittelbad geführt.

Fig. 11 zeigt eine dritte Variante einer Extrusionsanordnung mit einem Mischereinsatz 3 nach einem der vorhergehenden Ausführungsbeispiele. Diese Extrusionsanordnung besteht aus einem ersten Extruder 201, einem zweiten Extruder 211 einer statischen Mischstrecke, welche den ersten Extruder 201 mit dem zweiten Extruder 211 verbindet sowie ein Düsenelement 240, durch welches die gekühlte Kunststoffschmelze die Extrusionsanordnung verlässt. Die statische Mischstrecke enthält einen statischen Mischer 220. Anstelle des statischen Mischers oder als zusätzliches Element kann auch ein Wärmetauscher angebracht werden. Es können auch Apparate eingesetzt werden, bei denen die Funktionen eines Wärmetauschers und eines Mischers kombiniert sind. In der vorliegenden Extrusionsanordnung kann ein Verfahren zur Herstellung von niederdichten Schäumen durchgeführt werden. Hierzu wird ein Kunststoff in dem ersten Extruder 201 zu einer Kunststoffschmelze aufgeschmolzen, der Kunststoffschmelze ein Treibmittel über eine Treibmittelzugabevorrichtung 204 zugegeben , danach das Treibmittel in der Schmelze durch Misch- und Dispergiervorgänge im ersten Extruder 201 und einer von einem statischen Mischer 220 gebildeten statischen Mischstrecke zwischen erstem Extruder 201 und einem zweitem Extruder 211 und im zweiten Extruder 211 gelöst, und allenfalls beim Einsatz eines Wärmetauschers auch gekühlt, danach die mit Treibmittel beladene Schmelze in dem zweiten Extruder 211 gekühlt. Im Anschluss wird die Schmelze durch einen statischen Mischer 230 geführt, wobei der statische Mischer einen Mischereinsatz 3 aufweist, mittels welchem die Temperatur der Schmelze über den ganzen Querschnitt homogenisiert wird und der gleichzeitig gekühlt oder geheizt werden kann, um eine exakte Schmelzetemperatur zu erreichen. Danach wird die temperaturstabilisierte gekühlte Schmelze über eine Düse 240 ausgetragen.

In Fig. 12 ist eine Variante der Fig. 11 gezeigt, welche eine zusätzliche Zugabevorrichtung für Treibmittel 224 oder andere Additive im Bereich der Transferleitung 215 zeigt. Diese Zugabevorrichtung für Treibmittel kann gemeinsam mit den Zugabevorrichtungen 104 und 214 verwendet werden, wahlweise kann auch auf die Zugabe von Treibmitteln oder Additiven in maximal zwei der drei Zugabevorrichtungen 204, 214, 224 verzichtet werden. Das heisst, je nach der Zusammensetzung der Kunststoffschmelze und/oder deren gewünschten mechanischen Eigenschaften können eine oder mehrere Zugabevorrichtungen zum Einsatz kommen.

Die Erfindung ist nicht auf die vorliegenden Ausführungsbeispiele der Mischereinsätze beschränkt. Die Stegelemente können sich in ihrer Anzahl und in ihren Abmessungen unterscheiden. Anstatt von Stegelementen können Rohrelemente oder flächige Elemente, beispielsweise Flügelelemente vorgesehen sein. Des Weiteren kann sich die Anzahl der Kanäle in den Stegelementen je nach dem geforderten Wärmebedarf für die Wärmeübertragung unterscheiden. Auch können die Neigungswinkel, den die Gruppen zur Längsachse einschliessen, je nach Anwendung variieren. Es können auch mehr als zwei Mischereinsätze hintereinander angeordnet werden.

## Patentansprüche

1. Verfahren zur Herstellung von niederdichten Schäumen, wobei der niederdichte Schaum eine Dichte von weniger als 50% der Dichte einer ungeschäumten Polymerschmelze aufweist, wobei ein Kunststoff in einem ersten Extruder (201) zu einer Kunststoffschmelze aufgeschmolzen wird, die Kunststoffschmelze einem zweiten Extruder (211) zugeführt wird, der Kunststoffschmelze ein Treibmittel zugegeben wird, wodurch eine mit Treibmittel beladene Schmelze erhalten wird, danach die mit Treibmittel beladene Schmelze in dem zweiten Extruder (211) gekühlt wird, die Schmelze nach Verlassen des zweiten Extruders (211) durch einen statischen Mischer (230) geführt wird, wobei der statische Mischer einen Mischereinsatz (3) aufweist, wobei der Mischereinsatz (3) Einbauelemente aufweist, die in die mit Treibmittel beladene Schmelze eingreifen, wobei zumindest eines der Einbauelemente einen Kanal enthält, welcher von einem Wärmeträgerfluid durchströmt wird, sodass die Temperatur der mit Treibmittel beladenen Schmelze über den ganzen Querschnitt des Mischereinsatzes homogenisiert wird, wobei der statische Mischer gekühlt und/oder beheizt wird, um eine temperaturstabilisierte gekühlte mit Treibmittel beladene Schmelze zu erhalten, danach die temperaturstabilisierte gekühlte mit Treibmittel beladene Schmelze über ein Düsenelement (240, 250) ausgetragen wird, wobei die mit Treibmittel beladene Schmelze über die Einbauelemente gekühlt oder beheizt wird.

2. Verfahren nach Anspruch 1, wobei die gesamte mit Treibmittel beladene Schmelze durch die Einbauelemente im Mischereinsatz kontinuierlich über den ganzen Querschnitt gemischt wird, ohne dass der Schmelzestrom in Teilströme aufgeteilt wird.

3. Verfahren nach einem der vorhergehenden Ansprüche, wobei das Treibmittel in der Schmelze durch Misch- und Dispergiervorgänge im ersten Extruder (201) und/oder einem statischen Mischer (230) und/oder einer Transferleitung (215) zwischen erstem und dem zweitem Extruder (211) und/oder im zweiten Extruder (211) gelöst wird.

4. Verfahren nach einem der vorhergehenden Ansprüche, wobei die Schmelze nach dem Austritt aus dem ersten Extruder (201) durch einen statischen Mischer (220) geführt wird, bevor die Schmelze in den zweiten Extruder (211) eintritt.

5. Verfahren nach einem der vorhergehenden Ansprüche, wobei zwischen dem ersten Extruder (201) und zweiten Extruder (211) ein Temperaturausgleich erfolgt, wobei die Schmelze durch eine Masse- oder Wärmeaustauschvorrichtung, einen dynamischen Mischer, einen statischen Mischer, einen Wärmetauscher oder eine Transferleitung, die als beheizbares oder kühlbares Rohrelement ausgebildet sein kann, oder durch eine Kombination von zumindest zwei der vorgenannten Masse- oder Wärmeaustauschvorrichtungen geführt wird.

6. Verfahren nach einem der vorhergehenden Ansprüche, wobei stromabwärts des Mischereinsatzes (3) die Differenz zwischen der niedrigsten und höchsten Temperatur im Schmelzequerschnitt nach dem Mischereinsatz weniger als 5 Grad Celsius beträgt, sodass die niedrigste und höchste Temperatur im Schmelzequerschnitt nach dem Mischereinsatz um weniger als 5 Grad Celsius auseinander liegen.

7. Verfahren nach einem der vorhergehenden Ansprüche, wobei die Einbauelemente rohrförmige, stabförmige oder flächige oder flügelartige Stegelemente umfassen.

8. Verfahren nach Anspruch 7, wobei zumindest ein Teil der Stegelemente eine Gruppe ausbildet, wobei die Stegelemente je eine Mittenachse aufweisen, wobei die Mittenachsen der zu der Gruppe gehörigen Stegelemente einen konstanten Winkel zur Mittenachse des Mischereinsatzes einschliessen.

9. Verfahren nach einem der vorhergehenden Ansprüche, wobei der Mischereinsatz (3) eine erste Gruppe (5) von Stegelementen (9) sowie eine zweite Gruppe (6) von Stegelementen (10) umfasst, wobei die erste Gruppe (5) von Stegelementen (9) sich entlang einer gemeinsamen ersten Gruppenebene (7) erstreckt und die zweite Gruppe (6) von Stegelementen (10) sich entlang einer zweiten gemeinsamen Gruppenebene (8) erstreckt.

10. Verfahren nach Anspruch 9, wobei die Gruppenebene (7) durch die Mittenachsen der zu der entsprechenden Gruppe gehörigen Stegelemente oder Rohrelemente gebildet wird.

11. Verfahren nach Anspruch 9 oder 10, wobei mindestens ein Teil der Stegelemente (9, 10) Kanäle (11, 12) aufweist, wobei die Kanäle sich von einem ersten Ende (13) des Stegelements (9, 10) zu einem zweiten Ende (14) des Stegelements (9, 10) erstrecken, wobei das Mantelelement (2) je einen korrespondierenden Kanal enthält, der mit dem ersten Ende (13) und zweiten Ende (14) des Stegelements (9, 10) in fluidleitender Verbindung steht.

12. Verfahren nach einem der vorhergehenden Ansprüche, wobei die Schmelzetemperatur nach dem Mischereinsatz über den kühl- und heizbaren Mischereinsatz (3) geregelt wird.

13. Verfahren nach einem der vorhergehenden Ansprüche, wobei das Düsenelement nach dem Mischereinsatz (3) als Düse (240) oder als Granulator (250) ausgebildet ist.

14. Verfahren nach einem der vorhergehenden Ansprüche, wobei das Treibmittel mittels einer Treibmittelzugabevorrichtung (204, 214, 224) in zumindest einem der ersten oder zweiten Extruder oder der Transferleitung (215) zugegeben wird.

## Claims

1. A method for manufacturing low density foams, wherein the low density foam has a density of less than 50% below the density of an unfoamed polymer melt, wherein a polymeric material is melted in a first extruder (201) to a polymer melt, wherein the polymer melt is fed to a second extruder (211), wherein a blowing agent is added to the polymer melt, such that a melt containing the blowing agent is obtained, thereafter the melt containing the blowing agent is cooled in the second extruder (211), thereafter the melt is directed through a static mixer (230) after leaving the second extruder (211), whereby the static mixer is disposed with a mixer insert (3), wherein the mixer insert (3) has insert elements, which engage with the melt, wherein at least one of the insert elements contains a channel for the passage of a heat exchange fluid such that the temperature of the melt is homogenized over the entire cross-section of the mixer insert, whereby the static mixer can be cooled and/or heated to obtain a temperature stabilized cooled melt, whereby the temperature stabilized cooled melt is discharged subsequently through a die element (240, 250), wherein the melt containing the blowing agent is cooled or heated by means of the insert elements.

2. The method of claim 1, wherein the entire melt is mixed by the insert elements continuously in the mixer insert, whereby the melt flow is not divided into partial flows.

3. The method of one of the preceding claims, wherein the blowing agent in the melt is dissolved by mixing and dispersion processes in the first extruder (201) and/or in a static mixer (230) and/or in a transfer conduit (215) between the first and the second extruder (211) and/or in the second extruder (211).

4. The method of one of the preceding claims, wherein the melt is directed through a static mixer (220) after leaving the first extruder (201) and before the melt enters the second extruder (211).

5. The method of one of the preceding claims, wherein a temperature equalization is obtained between the first and second extruder, wherein the melt is directed through a mass or heat exchange device, from the group of at least one of a dynamic mixer, a static mixer, a heat exchanger or a transfer conduit, which can be configured as a heatable or coolable tubular element or by a combination of at least of two of said mass transfer or heat exchange devices.

6. The method of one of the preceding claims, wherein downstream of the mixer insert (3) the temperature between the lowest and the highest temperature in the melt cross-section after the mixer insert differs less than 5 degrees Celsius from each other.

7. The method of one of the preceding claims, wherein the insert elements comprise tubular, web-shaped or substantially two-dimensional, or wing-shaped web elements.

8. The method of claim 7, wherein a group is formed by at least a portion of the web elements, wherein the web elements each comprise a central axis, wherein the central axes of the web elements which belong to the group enclose a constant angle to the central axis of the mixer insert.

9. The method of one of the preceding claims, wherein the mixer insert (3) comprises a first group (5) of web elements and a second group (6) of web elements, wherein the first group (5) of web elements extends along a first common group plane (7) and the second group (6) of web elements extends along a second common group plane (8).

10. The method of claim 9, wherein the group plane (7) is formed by the central axes of the web elements or the tubular elements belonging to the respective group.

11. The method of one of claims 9 or 10, wherein at least a portion of the web elements (9, 10) contains channels (11,12), wherein the channels extend from a first end (13) of the web element (11) to the second end (14) of the web element (11), wherein the cladding element (2) contains a corresponding channel which is in fluidic connection with the first end (13) and the second end (14) of the web element.

12. The method of one of the preceding claims, wherein the melt temperature downstream of the mixer insert is controlled by the heatable or coolable mixer insert (3).

13. The method of one of the preceding claims, wherein the die element downstream of the mixer insert (3) is configured as a die (240) or a granulator (250).

14. The method of one of the preceding claims, wherein the blowing agent is added by a blowing agent supply device (204, 214, 224) in at least one of the first and second extruder or the transfer conduit (215).

## Revendications

1. Méthode de production de mousses à faible densité, la mousse à faible densité ayant une densité inférieure à 50% de la densité d'une masse fondue de polymère non expansée, une matière plastique étant fondue dans une première extrudeuse (201) pour former une masse fondue de plastique, la masse fondue de plastique étant fondue dans une seconde extrudeuse (211), en ce qu' un agent gonflant est ajouté à la masse fondue de plastique, moyennant quoi une masse fondue chargée d'agent gonflant est obtenue, puis la masse fondue chargée d'agent gonflant est refroidie dans la seconde extrudeuse (211), en ce que la masse fondue est guidée à travers un mélangeur statique (230) après avoir quitté la seconde extrudeuse (211), le mélangeur statique ayant un insert mélangeur (3), l'insert mélangeur (3) ayant des éléments intégrés qui s'engagent dans la masse fondue chargée d'agent gonflant, au moins l'un des éléments intégrés contenant un canal à travers lequel s'écoule un fluide caloporteur de sorte que la température de la masse fondue chargée d'agent gonflant est homogénéisée sur toute la section transversale de l'insert mélangeur, le mélangeur statique étant refroidi et / ou chauffé afin d'obtenir une masse fondue chargée en agent gonflant refroidie et stabilisée en température, après quoi la masse fondue chargée en agent gonflant refroidie et stabilisée en température est évacuée via un élément de buse (240, 250), la masse fondue chargée d'agent gonflant étant refroidie ou chauffée via les éléments intégrés.

2. Méthode selon la revendication 1, dans laquelle la totalité de la masse fondue chargée en agent gonflant est mélangée en continu sur toute la section transversale par les éléments intégrés dans l'insert mélangeur, sans que la masse fondue soit divisée en flux partiels.

3. Méthode selon l'une quelconque des revendications précédentes, dans laquelle l'agent gonflant est résolu dans la masse fondue par des procédés de mélange et de dispersion dans la première extrudeuse (201) et / ou dans un mélangeur statique (230) et / ou dans une ligne de transfert (215) entre la première et la seconde extrudeuse (211) et / ou dans la deuxième extrudeuse (211).

4. Méthode selon l'une quelconque des revendications précédentes, dans laquelle la masse fondue est passée à travers un mélangeur statique (220) après la sortie de la première extrudeuse (201) avant que la masse fondue n'entre dans la seconde extrudeuse (211).

5. Méthode selon l'une quelconque des revendications précédentes, dans laquelle une égalisation de température a lieu entre la première extrudeuse (201) et la deuxième extrudeuse (211), la fusion étant réalisée par un dispositif d'échange de masse ou de chaleur, un mélangeur dynamique, un mélangeur statique, un échangeur de chaleur ou une ligne de transfert qui peut être conçu comme un élément tubulaire chauffable ou refroidissable, ou est guidé par une combinaison d'au moins deux des dispositifs d'échange de masse ou d'échange de chaleur susmentionnés.

6. Méthode selon l'une quelconque des revendications précédentes, dans laquelle, en aval de l'insert mélangeur (3), la différence entre la température la plus basse et la température la plus élevée dans la section transversale de la masse fondue après l'insert mélangeur est inférieure à 5 degrés Celsius, de sorte que la différence entre la température la plus basse et la température la plus élevée dans la section transversale de la masse fondue après l'insert mélangeur soit inférieure à 5 degrés Celsius.

7. Méthode selon l'une quelconque des revendications précédentes, dans laquelle les éléments intégrés comprennent des éléments ailettes tubulaires en forme de tige ou plats ou en forme d'aile.

8. Méthode selon la revendication 7, dans laquelle au moins certains des éléments ailettes forment un groupe, les éléments ailettes ayant chacun un axe central, les axes centraux des éléments ailettes appartenant au groupe entourant un angle constant par rapport à l'axe central de l'insert mélangeur.

9. Méthode selon l'une quelconque des revendications précédentes, dans laquelle l'insert mélangeur (3) comprend un premier groupe (5) d'éléments ailettes (9) et un second groupe (6) d'éléments ailettes (10), le premier groupe (5) des éléments ailettes (9) s'étend le long d'un premier niveau de groupe commun (7) et le seconde groupe (6) d'éléments ailettes (10) s'étend le long d'un deuxième niveau de groupe commun (8).

10. Méthode selon la revendication 9, dans laquelle le niveau de groupe (7) étant formé par les axes centraux des éléments ailettes ou des éléments tubulaires appartenant au groupe correspondant.

11. Méthode selon la revendication 9 ou 10, dans laquelle au moins certains des éléments ailettes (9, 10) ont des canaux (11, 12), les canaux s'étendant d'une première extrémité (13) de l'élément ailette (9, 10) à une seconde extrémité (14) de l'élément ailette (9, 10), l'élément de boîtier (2) contenant chacun un canal correspondant qui est en connexion conductrice de fluide avec la première extrémité (13) et la seconde extrémité (14) de l'élément ailette (9, 10).

12. Méthode selon l'une quelconque des revendications précédentes, dans laquelle la température de la masse fondue est contrôlée après l'insert mélangeur via l'insert mélangeur refroidissant et chauffable (3).

13. Méthode selon l'une quelconque des revendications précédentes, dans laquelle l'élément de buse après l'insert mélangeur (3) est conçu comme une buse (240) ou comme un granulateur (250).

14. Méthode selon l'une quelconque des revendications précédentes, dans laquelle l'agent gonflant est ajouté au moyen d'un dispositif d'addition d'agent gonflant (204, 214, 224) dans au moins l'une des premières ou secondes extrudeuses ou de la ligne de transfert (215).
